(19) Europäisches Patentamt
European Patent Office
Office européen des brevets

(11) EP 2 902 198 A1

(12) EUROPEAN PATENT APPLICATION
published in accordance with Art. 153(4) EPC

(43) Date of publication:
**05.08.2015 Bulletin 2015/32**

(21) Application number: **13842249.8**

(22) Date of filing: **27.09.2013**

(51) Int Cl.:
***B41C 1/05*** (2006.01) ***B41N 1/12*** (2006.01)

(86) International application number:
**PCT/JP2013/076209**

(87) International publication number:
**WO 2014/051029 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.09.2012 JP 2012217580**

(71) Applicant: **FUJIFILM Corporation**
**Tokyo 106-8620 (JP)**

(72) Inventors:
- **MIZOGUCHI Takao**
**Haibara-gun**
**Shizuoka 421-0396 (JP)**
- **ARIMURA Keisuke**
**Haibara-gun**
**Shizuoka 421-0396 (JP)**

(74) Representative: **Hoffmann Eitle**
**Patent- und Rechtsanwälte PartmbB**
**Arabellastraße 30**
**81925 München (DE)**

# (54) MANUFACTURING METHOD FOR ORIGINAL PLATE FOR CYLINDRICAL PRINTING PLATE, CYLINDRICAL PRINTING PLATE, AND PLATEMAKING METHOD THEREFOR

(57) There is provided a process for producing a cylindrical printing plate precursor, comprising (1) a preparation step of preparing a cured resin sheet, (2) a wrapping step of wrapping the cured resin sheet around a cylindrical support, (3) a supply step of supplying a curable composition to a gap formed between end parts to be joined of the cured resin sheet, and (4) a curing step of curing the curable composition, the curable composition comprising a solvent that dissolves or swells the cured resin sheet, the solvent having a content of 0.2 to 2.0 mass% of the total amount of the curable composition, and the curable composition having a percentage dimensional change on curing of no greater than 2%.

*FIG. 1*

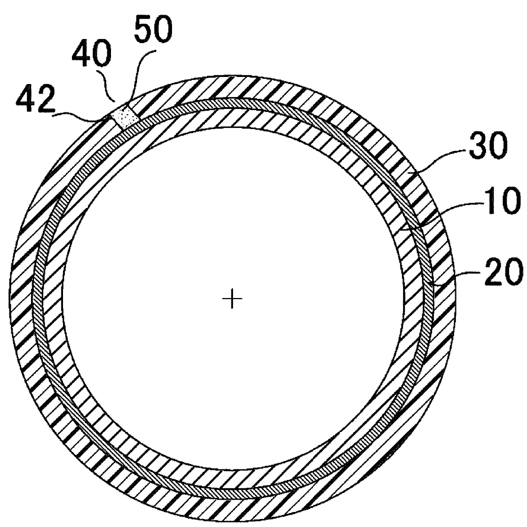




Printed by Jouve, 75001 PARIS (FR)

## Description

The present invention relates to a process for producing a cylindrical printing plate precursor, a cylindrical printing plate and a process for making same.

As a process for forming a printing plate by forming asperities in a photosensitive resin layer layered on a support surface area, a method in which a recording layer formed using a photosensitive composition is exposed to UV light through an original image film to thus selectively cure an image area, and an uncured area is removed using a developer, the so-called 'analogue plate making', is well known.

When a relief printing plate is made by analogue plate making, since an original image film employing a silver salt material is generally necessary, production time and cost for the original image film are incurred. Furthermore, since development of the original image film requires a chemical treatment, and treatment of development effluent is required, simpler plate making methods, for example, a method that does not use an original image film, a method that does not require development processing, etc. have been examined.

A relief printing plate is a letterpress printing plate having a relief layer with asperities, and such a relief layer with asperities is obtained by patterning a recording layer comprising a photosensitive composition containing as a main component, for example, an elastomeric polymer such as a synthetic rubber, a resin such as a thermoplastic resin, or a mixture of a resin and a plasticizer, thus forming asperities. Among such relief printing plates, one having a soft relief layer is sometimes called a flexographic plate.

In recent years, flexographic printing has employed a method in which a cylindrical printing plate precursor having a resin layer that can form a pattern is formed on a cylindrical support shape, a pattern is then formed on the surface thereof, and it is mounted on a plate cylinder.

As a method that does not require an original image film, a relief printing plate precursor has been proposed in which a laser sensitive mask layer element on which an image mask can be formed is provided on a recording layer.

Furthermore, with regard to a method for producing a cylindrical flexographic printing plate precursor, a method in which a sheet-shaped flexographic printing plate precursor is wrapped around a cylindrical support and ends are fixed using an adhesive is often employed. For example, in Patent Document 1 a UV-curing (UV) adhesive is used for an end part. Patent Document 2 discloses a seamless printing plate to which a photosensitive resin is applied.

Patent Document 1: JP-A-2005-238637 (JP-A denotes a Japanese unexamined patent application publication)
Patent Document 2: JP-A-2002-187373

In Patent Document 1, a UV adhesive is used for adhering end parts, and although curing can be easily carried out by making the end parts come into intimate contact, the percentage dimensional change is large. Because of this, in order to flatten a bulge due to cured adhesive it is necessary to carry out a cutting step involving the use of a cutter or polishing, and there is the problem that the number of steps increases and skill is required. In Patent Document 2, adhesion of end parts is strengthened by machining the end parts, but there is the problem that the machining of end parts of a printing plate is complicated.

It is an object of the present invention to provide a process for producing a cylindrical printing plate precursor by a simple method.

More particularly, an object of the present invention is to provide a process for producing a cylindrical printing plate precursor in which the process of flattening a section where end parts are joined is simple or unnecessary, the strength of the section where end parts are joined is high, and the printing properties of the section where the end parts are joined is excellent. It is another object thereof to provide a cylindrical printing plate and a process for making a cylindrical printing plate.

The objects have been attained by means <1>, <13>, <14>, and <15>. They are listed together with <2> to <12>, which are preferred embodiments.

<1> A process for producing a cylindrical printing plate precursor, comprising (1) a preparation step of preparing a cured resin sheet, (2) a wrapping step of wrapping the cured resin sheet around a cylindrical support, (3) a supply step of supplying a curable composition to a gap formed between end parts to be joined of the cured resin sheet, and (4) a curing step of curing the curable composition, the curable composition comprising a solvent that dissolves or swells the cured resin sheet, the solvent having a content of 0.2 to 2.0 mass% of the total amount of the curable composition, and the curable composition having a percentage dimensional change on curing of no greater than 2%,
<2> the process for producing a cylindrical printing plate precursor according to <1>, wherein the curable composition comprises an ethylenically unsaturated compound, and the ethylenically unsaturated group content is 0.01 to 0.5 mmol per g of the curable composition,
<3> the process for producing a cylindrical printing plate precursor according to <1> or <2>, wherein the curable composition comprises a polymerization initiator,

<4> the process for producing a cylindrical printing plate precursor according to any one of <1> to <3>, wherein the curable composition comprises a cyclic ether compound,
<5> the process for producing a cylindrical printing plate precursor according to any one of <1> to <4>, wherein it comprises between the wrapping step (2) and the curing step (4) a flattening step (a) of flattening the surface of a curable composition that is supplied or has been supplied,
<6> the process for producing a cylindrical printing plate precursor according to any one of <1> to <5>, wherein it comprises between the wrapping step (2) and the supply step (3) a groove-forming step (b) of forming a groove between opposite end parts of the cured resin sheet,
<7> the process for producing a cylindrical printing plate precursor according to any one of <3> to <6>, wherein the polymerization initiator is a photopolymerization initiator and the curing step (4) is a photocuring step (4a) or the polymerization initiator is a thermopolymerization initiator and the curing step (4) is a thermal curing step (4b),
<8> the process for producing a cylindrical printing plate precursor according to any one of <1> to <7>, wherein the cylindrical printing plate precursor is a cylindrical printing plate precursor for laser engraving,
<9> the process for producing a cylindrical printing plate precursor according to any one of <1> to <8>, wherein the cured resin sheet comprises a binder polymer selected from the group consisting of a conjugated diolefin resin, a polyurethane resin, and an acetal resin,
<10> the process for producing a cylindrical printing plate precursor according to any one of <1> to <9>, wherein the curable composition comprises a resin selected from the group consisting of an acrylic resin, a polyester resin, a polyconjugated diene, and an epoxy resin,
<11> the process for producing a cylindrical printing plate precursor according to any one of <1> to <10>, wherein the curable composition comprises as a solvent an aliphatic carboxylic acid ester having 4 to 6 carbons or an aliphatic ketone having 3 to 5 carbons,
<12> the process for producing a cylindrical printing plate precursor according to any one of <1> to <11>, wherein the wrapping step (2) is a wrapping step of wrapping the cured resin sheet around a cylindrical support comprising a cushion layer,
<13> a process for making a cylindrical printing plate, comprising a step of preparing a cylindrical printing plate precursor produced by the production process according to any one of <1> to <12>, and an engraving step of laser-engraving the cylindrical printing plate precursor thus prepared,
<14> a cylindrical printing plate made by the process according to <13>,
<15> a process for making a cylindrical printing plate, comprising (1) a preparation step of preparing a printing plate sheet, (2) a wrapping step of wrapping the printing plate sheet around a cylindrical support, (3) a supply step of supplying a curable composition to a gap between opposite ends of the printing plate sheet, and (4) a curing step of curing the curable composition, the curable composition comprising a solvent that dissolves or swells the printing plate sheet, the solvent having a content of 0.2 to 2.0 mass% of the total amount of the curable composition, and the curable composition having a percentage dimensional change on curing of no greater than 2%.

In accordance with the present invention, there can be provided a cylindrical printing plate precursor by a simple method. In accordance with the present invention, there can be provided a cylindrical printing plate precursor for which a section where end parts of a cured resin sheet are joined can easily be flattened, the joining strength is high, the joined part has good adhesion even under high temperature and high humidity, and a seamless printing plate having excellent printing properties for the joined part can be obtained. This printing plate precursor can give a printing plate suitable for flexographic printing by laser engraving.
FIG. 1:One example of a schematic diagram showing the constitution of the cylindrical printing plate precursor of the present invention.

Explanation of Reference Numerals and Symbols

10: cylindrical support
20: cushion layer
30: cured resin sheet
40: join part
42: gap
50: curable composition

The process for producing a cylindrical printing plate precursor of the present invention is explained below.
In the present specification, the notation 'xx to yy' as a numerical range means a numerical range that includes

xx and yy, which are lower and upper limits.

'(Meth)acrylate', etc. has the same meaning as that of 'acrylate and/or methacrylate', etc.

Furthermore, in the present invention, 'mass%' has the same meaning as that of 'wt%', and 'parts by mass' has the same meaning as that of 'parts by weight'.

In the present invention, a combination of two or more preferred embodiments is a more preferred embodiment.

(Process for producing cylindrical printing plate precursor)

The process for producing a cylindrical printing plate precursor of the present invention comprises (1) a preparation step of preparing a cured resin sheet, (2) a wrapping step of wrapping the cured resin sheet around a cylindrical support, (3) a supply step of supplying a curable composition to a gap formed between parts of the cured resin sheet that are to be joined, and (4) a curing step of curing the curable composition, the curable composition comprising a solvent that dissolves or swells the cured resin sheet, the solvent having a content of 0.2 to 2.0 mass% of the total amount of the curable composition, and the curable composition having a percentage dimensional change on curing of no greater than 2%.

Furthermore, the cylindrical printing plate precursor of the present invention is a precursor having a flat surface, for making a cylindrical printing plate, obtained by the process for producing a cylindrical printing plate precursor of the present invention.

Examples of application embodiments of the cylindrical printing plate precursor of the present invention include a relief printing plate, an intaglio plate, a stencil plate, and a stamp, and preferred examples include a cylindrical printing plate precursor for laser engraving, which is of one kind of relief printing plate.

The cylindrical printing plate precursor is preferably a cylindrical flexographic printing plate precursor.

Referring to FIG. 1, one schematic example of the constitution of layers of a cylindrical printing plate precursor obtained by the production process of the present invention is explained below.

An optional cushion layer 20 is provided on the outer periphery of a cylindrical support 10, and a cured resin sheet 30 is affixed to the outside thereof. A gap 42 is formed in a section 40 where end parts of the cured resin sheet 30 are to be joined, and a curable composition (adhesive) 50 is supplied to the gap 42 and cured.

The production process of the present invention is explained below in sequence with regard to each step, the components used in each step and the contents thereof, the properties of the compositions, etc.

<Preparation step>

The process for producing a cylindrical printing plate precursor of the present invention comprises as a first essential step (1) a preparation step of preparing a cured resin sheet.

The cured resin sheet is not particularly limited as long as it is a sheet that is formed by shaping a curable resin composition comprising at least a resin component (binder polymer) and a curable component into a sheet shape and then carrying out curing by the action of heat and/or light, but it is preferably formed from a resin composition comprising the components shown below.

Furthermore, the cured resin sheet is preferably laser-engraveable.

Preferred examples of a method for forming the cured resin sheet include a method in which a resin composition is prepared, if necessary a solvent is removed from this resin composition, and it is then melt-extruded onto a support and a method in which a resin composition is prepared, the resin composition is cast onto a support, and this is heated and dried in an oven, etc. to thus remove a solvent.

The resin composition used in the present invention may be produced by for example dissolving or dispersing a binder polymer, a filler, an ethylenically unsaturated compound, a fragrance, a plasticizer, etc. in an appropriate solvent, and subsequently dissolving a crosslinking agent, a polymerization initiator, a crosslinking promoter, etc. From the viewpoint of the ease of forming the cured resin sheet, the thickness precision of a cylindrical printing plate precursor obtained, and the ease of handling the cured resin sheet, it is necessary for at least part of the solvent component, and preferably almost all thereof, to be removed in a stage of producing a cylindrical printing plate precursor, and it is therefore preferable to use an organic solvent having an appropriate degree of volatility as a solvent.

The cured resin sheet and each component in a resin composition suitably used in the production thereof are explained in detail.

<Binder polymer>

The cured resin sheet comprises a binder polymer.

The resin composition used in the present invention comprises a binder polymer.

The binder polymer (hereinafter, also called a 'binder') preferably has a weight-average molecular weight of

1,000 to 3,000,000. In the present invention, with regard to the binder, one type may be used on its own or two or more types may be used in combination. In particular, when the resin composition is used in the relief-forming layer of the cylindrical printing plate precursor for laser engraving, it is preferable to select a binder while taking into consideration various performance aspects such as laser engraving sensitivity, ink transfer properties, and engraving residue dispersibility. In the present invention, as long as properties desired for printing are obtained, a single elastomer material or a combination thereof may be used in the resin composition. Examples of the elastomer material are described in the Plastic Technology Handbook, Chandler et al., Ed., (1987). In many cases, for preparation of an elastomer layer it is preferable to use a thermoplastic elastomer material.

In the present invention, the weight-average molecular weight of the binder polymer is preferably 1,000 to 3,000,000, more preferably 2,000 to 500,000, yet more preferably 3,000 to 100,000, and particularly preferably 5,000 to 50,000.

The weight-average molecular weight may be determined by a GPC (gel permeation chromatograph) method using a reference polystyrene calibration curve. The weight-average molecular weight is the value on a polystyrene basis by GPC measurement.

In the present invention, examples of the binder polymer include a polystyrene resin, a polyester resin, a polyamide resin, a polyurea resin, a polyamideimide resin, a polyurethane resin, a polysulfone resin, a polyether sulfone resin, a polyimide resin, a polycarbonate resin, a hydroxyethylene unit-containing hydrophilic polymer, an acrylic resin, an acetal resin, an epoxy resin, a polycarbonate resin, and a conjugated diolefin resin. Among them, particularly preferred examples include a conjugated diolefin hydrocarbon resin, a polyurethane resin, and an acetal resin.

Furthermore, as the binder polymer, a thermoplastic elastomer can be cited preferably. With this embodiment, the cylindrical printing plate precursor has excellent thickness precision and can suitably be used as a cylindrical printing plate precursor for laser engraving.

Examples of the thermoplastic elastomer include a chlorinated polyethylene-based thermoplastic elastomer, syndiotactic-1,2-polybutadiene, a simple blended olefin-based thermoplastic elastomer, a polymerized olefin-based thermoplastic elastomer, a crosslinked olefin-based thermoplastic elastomer, a polyvinyl chloride-based thermoplastic elastomer, a polyurethane-based thermoplastic elastomer, a polyester-based thermoplastic elastomer, a polyamide-based thermoplastic elastomer, a fluorine-based thermoplastic elastomer, a styrene-conjugated diene-based block copolymer, and a hydrogenated styrene-based thermoplastic elastomer.

Among them, preferred examples of the thermoplastic elastomer include a styrene-butadiene-styrene block copolymer.

Hereinafter, the conjugated diolefin resin, the polyulethane resin and the acetal resin preferably used as a binder polymer will be described in detail.

<Conjugated diolefin resin>

Examples of the conjugated diolefin hydrocarbon resin include natural or synthetic polymers of a conjugated diolefin hydrocarbon, such as polyisoprene, 1,2-polybutadiene, 1,4-polybutadiene, and butadiene/acrylonitrile and diene/styrene thermoplastic elastomer block copolymers. In one embodiment, it is an elastomer block copolymer in the form of an A-B-A type block copolymer where A denotes a non-elastomer block and B denotes an elastomer block. The non-elastomer block A is derived from for example a vinyl polymer such as polystyrene. Examples of the elastomer block B include polybutadiene and polyisoprene. An elastomer material such as a copolymer of butadiene and styrene, a copolymer of isoprene and styrene, or a styrene-diene-styrene triblock copolymer is particularly preferable. The binder may be soluble, swellable, or dispersible in an aqueous, semi-aqueous, water, or organic solvent washing solution. In general, an elastomer binder suitable for washing development is also suitable for use in a thermal treatment in which an unpolymerized region of a photopolymerizable layer softens, melts, or flows during heating.

polyurethane resin

The resin composition that is used in the present invention more preferably comprises a polyurethane resin as a binder polymer.

The polyurethane resin is preferably a resin having a urethane bond which is a reaction product of at least one diol compound represented by following formula (1) and at least one diisocyanate compound represented by following formula (2). In order to obtain the polyurethane resin, a synthesis method based on a known polyaddition reaction can be used. For example, the synthesis method described in Examples 1 to 7 of JP-A-2011-136430 may be used.

$$HO\text{-}X^0\text{-}OH \qquad (1)$$

$$OCN\text{-}Y^0\text{-}NCO \qquad (2)$$

In formula (1) and formula (2), $X^0$ and $Y^0$ independently represent a divalent organic group.
The diol compound and the diisocyanate compound will be described below.

- Diol compound -

In the present invention, preferred examples of the diol compound include the straight-chain aliphatic diols, branched aliphatic diols, and cyclic aliphatic diols below.
Examples of the straight-chain aliphatic diol include a straight-chain aliphatic diol having 2 to 50 carbons such as 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,16-hexadecanediol, or 1,20-eicosanediol.
Examples of the branched aliphatic diol include a branched aliphatic diol having 2 to 30 carbons such as 2-methyl-1,3-propanediol, 2-ethyl-1,3-propanediol, neopentyl glycol, 2,2-diethyl-1,3-propanediol, 2-methyl-2-propyl-1,3-propanediol, 2-butyl-2-ethyl-1,3-propanediol, 2,2-dibutyl-1,3-propanediol, 1,2-butanediol, 2-ethyl-1,4-butanediol, 2-isopropyl-1,4-butanediol, 2,3-dimethyl-1,4-butanediol, 2,3-diethyl-1,4-butanediol, 3,3-dimethyl-1,2-butanediol, pinacol, 1,2-pentanediol, 1,3-pentanediol, 2,3-pentanediol, 2-methyl-2,4-pentanediol, 3-methyl-1,5-pentanediol, 2-ethyl-1,5-pentanediol, 3-ethyl-1,5-pentanediol, 2-isopropyl-1,5-pentanediol, 3-isopropyl-1,5-pentanediol, 2,4-dimethyl-1,5-pentanediol, 2,4-diethyl-1,5-pentanediol, 2,3-dimethyl-1,5-pentanediol, 2,2,3-trimethyl-1,3-pentanediol, 1,2-hexanediol, 1,3-hexanediol, 1,4-hexanediol, 2,5-hexanediol, 2-ethyl-1,6-hexanediol, 2-ethyl-1,3-hexanediol, 2-isopropyl-1,6-hexanediol, 2,4-diethyl-1,6-hexanediol, 2,5-dimethyl-2,5-hexanediol, 2-methyl-1,8-octanediol, 2-ethyl-1,8-octanediol, 2,6-dimethyl-1,8-octanediol, 1,2-decanediol, or 8,13-dimethyl-1,20-eicosanediol.
Examples of the cyclic aliphatic diol include a cyclic aliphatic diol having 2 to 30 carbons such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, *m*-xylene-α,α'-diol, p-xylene-α,α'-diol, 2,2-bis(4-hydroxycyclohexyl)propane, 2,2-bis(4-hydroxyphenyl)propane, or dimer diol.
Among them, the diol compound is preferably a polycarbonate diol represented by Formula (CD) below.

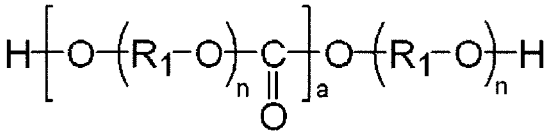

( CD )

In formula (CD), $R_1$'s independently represent a linear, branched and/or cyclic divalent hydrocarbon group having 2 to 50 carbon atoms, which may contain an oxygen atom or the like (at least one atom selected from the group consisting of a nitrogen atom, a sulfur atom and an oxygen atom) in the carbon skeleton; $R_1$'s may be a single component or may be composed of plural components; n is preferably an integer from 1 to 500; and a is preferably an integer of 1 or greater and more preferably an integer of 2 to 10.
Among them, $R_1$ is preferably a divalent alkylene group having 2 to 6 carbon atoms, and more preferably a dimethylene group, a trimethylene group, a tetramethylene group or a hexamethylene group. n is preferably an integer from 1 to 5.
The 'hydrocarbon group' in $R_1$ is a saturated or unsaturated hydrocarbon group.
The 'carbon skeleton' in $R_1$ means a structural part having 3 to 50 carbons forming the hydrocarbon group, and the term 'which may contain an oxygen atom, etc. in a carbon skeleton' means a structure in which an oxygen atom, etc. is inserted into a carbon-carbon bond of a main chain or a side chain. Furthermore, it may be a substituent having an oxygen atom, etc., bonded to a carbon atom in a main chain or a side chain. In the present invention, 'main chain' means the relatively longest bonded chain in the molecule of a polymer compound that constitutes a resin, and 'side chain' means a carbon chain that is branched from the main chain.
$R_1$ in the polycarbonate diol represented by Formula (CD) is preferably introduced from a diol compound preferably used as a starting material for synthesis of the polycarbonate diol.
Preferred examples of the diol compound include the above-mentioned straight-chain aliphatic diols, branched aliphatic diols, and cyclic aliphatic diols.
Examples of the polyhydric alcohol that is preferably used in order to introduce a hydrocarbon group containing at least one type of atom selected from the group consisting of nitrogen, sulfur, and oxygen in $R_1$ include diethylene glycol, triethylene glycol, tetraethylene glycol, glycerol, 1,2,6-hexanetriol, trimethylolethane, trimethylolpropane, pentaerythritol, dihydroxyacetone, 1,4:3,6-dianhydroglucitol, diethanolamine, *N*-methyldiethanolamine, dihydroxyethylacetamide, 2,2'-dithiodiethanol, and 2,5-dihydroxy-1,4-dithiane.
With regard to $R_1$ as a hydrocarbon group having at least one type of atom selected from the group consisting

of nitrogen, sulfur, and oxygen, from the viewpoint of solvent resistance $R_1$ preferably comprises at least one ether bond, and from the viewpoint of solvent resistance and durability $R_1$ is more preferably a diethylene glycol-derived group (group represented by $-(CH_2)_2-O-(CH_2)_2-$). Preferred examples of $R_1$ include a group represented by Formula (CD2) below.

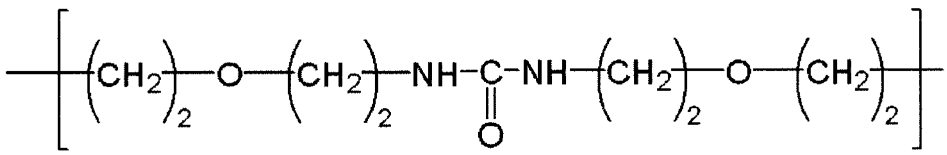

(CD 2)

The polycarbonate diol may be produced by for example a conventionally known method as described in JP-B-5-29648 (JP-B denotes a Japanese examined patent application publication), and specifically it may be produced by an ester exchange reaction between a diol and a carbonic acid ester.

Examples of commercially available polycarbonate diols include the product name 'PLACCEL CD205PL', the product name 'PLACCEL CD210PL', and the product name 'PLACCEL CD220PL' (all manufactured by Daicel Chemical Industries, Ltd.), 'PCDL T5652' and 'PCDL L4672' (both manufactured by Asahi Kasei), and 'UM-CARB90 (1/1)' (Ube Industries, Ltd.).

In the present invention, with regard to the polycarbonate diol, one type or two or more types may be used according to the intended purpose, but it is desirable to use one type of polycarbonate diol.

The number-average molecular weight of these polycarbonate diols is preferably in the range of 1,000 to 200,000, more preferably in the range of 1,500 to 10,000, and yet more preferably in the range of 2,000 to 8,000.

A polyurethane resin having a carbonate bond may be obtained by subjecting a hydroxy group of the polycarbonate diol to a polyaddition reaction with an isocyanate group of the diisocyanate compound represented by Formula (2).

- Diisocyanate compound -

Next, the diisocyanate compound represented by Formula (2) is explained.

In the above-mentioned Formula (2), $Y^0$ represents a divalent aliphatic or aromatic hydrocarbon group which may be substituted. According to necessity, $Y^0$ may have another functional group which does not react with an isocyanate group, for example, an ester group, a urethane group, an amide group, or an ureido group.

Examples of the diisocyanate compound include an aliphatic diisocyanate compound, an alicyclic diisocyanate compound, an aromatic-aliphatic diisocyanate compound, and an aromatic diisocyanate compound.

Examples of the aliphatic diisocyanate compound include 1,3-trimethylene diisocyanate, 1,4-tetramethylene diisocyanate, 1,3-pentamethylene diisocyanate, 1,5-pentamethylene diisocyanate, 1,6-hexamethylene diisocyanate, 1,2-propylene diisocyanate, 1,2-butylene diisocyanate, 2,3-butylene diisocyanate, 1,3-butylene diisocyanate, 2-methyl-1,5-pentamethylene diisocyanate, 3-methyl-1,5-pentamethylene diisocyanate, 2,4,4-trimethyl-1,6-hexamethylene diisocyanate, 2,2,4-trimethyl-1,6-hexamethylene diisocyanate, 2,6-diisocyanate methyl caproate, and lysine diisocyanate.

Examples of the alicyclic diisocyanate compound include 1,3-cyclopentane diisocyanate, 1,4-cyclohexane diisocyanate, 1,3-cyclohexane diisocyanate, 3-isocyanatomethyl-3,5,5-trimethylcyclohexyl isocyanate, 4,4'-methylenebis(cyclohexyl isocyanate), methyl-2,4-cyclohexane diisocyanate, methyl-2,6-cyclohexane diisocyanate, 1,3-bis(isocyanatomethyl)cyclohexane, 1,4-bis(isocyanatomethyl)cyclohexane, isophorone diisocyanate, and norbornane diisocyanate.

Examples of the aromatic-aliphatic diisocyanate compound include 1,3-xylene diisocyanate, 1,4-xylene diisocyanate, $\omega,\omega'$-diisocyanato-1,4-diethylbenzene, 1,3-bis(1-isocyanato-1-methylethyl)benzene, 1,4-bis(1-isocyanato-1-methylethyl)benzene, and 1,3-bis($\alpha,\alpha$-dimethylisocyanatomethyl)benzene.

Examples of the aromatic diisocyanate compound include m-phenylene diisocyanate, *p*-phenylene diisocyanate, 2,4-tolylene diisocyanate, 2,6-tolylene diisocyanate, naphthylene-1,4-diisocyanate, 1,5-naphthalene diisocyanate, 4,4'-diphenyl diisocyanate, 4,4'-diphenylmethane diisocyanate, 2,4'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, and 3,3'-dimethoxydiphenyl-4,4'-diisocyanate.

Among them, 1,6-hexamethylene diisocyanate, 1,3-bis(isocyanatomethyl)cyclohexane, isophorone diisocyaante, 4,4'-diphenylmethane diisocyanate, and 2,4-tolylene diisocyanate are more preferable.

The polyurethane resin used in the present invention preferably has an ethylenically unsaturated group at an end or in a side chain of the main polymer chain. The ethylenically unsaturated group at an end of the main chain may be present at one end only, but the polyurethane resin preferably has the ethylenically unsaturated group at both ends of the main chain.

Examples of the ethylenically unsaturated group include a group with an unsaturated carboxylic acid as a starting material, such as an acryloyl group, a methacryloyl group, an acrylamide group, a methacrylamide group, or a

phthalimide group, and a radically polymerizable group such as a styryl group, a vinyl group, or an allyl group. Among them, an acryloyl group and a methacryloyl group are preferable.

An ethylenically unsaturated group can be introduced into an end of the main chain of the polyurethane resin by, in the polyaddition reaction used for the synthesis of the polyurethane resin, allowing a hydroxyl group or an isocyanate group to remain at an end of the main chain of the polyurethane resin obtained, and causing the polyurethane resin to react with a compound having a functional group which is reactive with the hydroxyl group or isocyanate group, and an ethylenically unsaturated group. The compound having such functional group is more preferably a compound having an isocyanate group for a terminal hydroxyl group, or a compound having a hydroxyl group for a terminal isocyanate group.

Specific examples of a compound having a functional group which is reactive with a hydroxyl group at an end of the main chain of the polyurethane resin and an ethylenically unsaturated group include, as commercially available products, 2-methacryloyloxyethyl isocyanate (KARENZ MOI (registered trademark)), 2-acryloyloxyethyl isocyanate (KARENZ AOI (registered trademark)) and 1,1-bis(acryloyloxymethyl)ethyl isocyanate (KARENZ BEI (registered trademark)) (all manufactured by Showa Denko K.K.).

Specific examples of a compound having a functional group which is reactive with an isocyanate group at an end of the main chain of the polyurethane resin and an ethylenically unsaturated group include 2-hydroxyethyl acrylate, 2-hydroxyethyl methacrylate, 2-hydroxypropyl acrylate and 2-hydroxypropyl methacrylate.

Examples of a method for introducing an ethylenically unsaturated group into a side chain of the polyurethane resin include a method of using a compound which already has an ethylenically unsaturated group as the diol compound or diisocyanate compound that is used as a raw material, in the polyaddition reaction used for the synthesis of the polyurethane resin. Furthermore, a method in which a polyurethane resin is obtained from a raw material monomer having a reactive group such as a carboxyl group, a hydroxyl group or an amino group, and then a compound having a functional group such as an epoxy group or an isocyanate group which reacts with the reactive group such as a carboxyl group, a hydroxyl group or an amino group carried in a side chain of the polyurethane resin, and an ethylenically unsaturated group, is allowed to react with the polyurethane resin to introduce the ethylenically unsaturated group into the side chain, may also be used.

The polyurethane resin used in the present invention may have, as a functional group, an organic group which contains at least one of an ether bond, an amide bond, a urea bond, an ester bond, a biuret bond and an allophanate bond, in addition to the urethane bond.

Acetal resin

The resin composition for laser engraving that is used in the present invention preferably comprises an acetal resin as a binder polymer. The acetal resin is preferably polyvinyl acetal, and derivatives thereof.

In this description, hereinafter, polyvinyl acetal and derivatives thereof are called just a polyvinyl acetal derivative. That is, a polyvinyl acetal derivative includes polyvinyl acetal and derivatives thereof, and is a generic term used to refer to compounds obtained by converting polyvinyl alcohol obtained by saponifying polyvinyl acetate into a cyclic acetal.

The acetal content in the polyvinyl acetal derivative (mole% of vinyl alcohol units converted into acetal relative to the total number of moles of vinyl acetate monomer starting material as 100 mol%) is preferably 30 to 90 mol%, more preferably 50 to 85 mol%, and particularly preferably 55 to 78 mol%.

The vinyl alcohol unit in the polyvinyl acetal is preferably 10 to 70 mol% relative to the total number of moles of the vinyl acetate monomer starting material, more preferably 15 to 50 mol%, and particularly preferably 22 to 45 mol%.

Furthermore, the polyvinyl acetal may have a vinyl acetate unit as another component, and the content thereof is preferably 0.01 to 20 mol%, and more preferably 0.1 to 10 mol%. The polyvinyl acetal derivative may further have another copolymerized constitutional unit.

Examples of the polyvinyl acetal derivative include a polyvinyl butyral derivative, a polyvinyl propylal derivative, a polyvinyl ethylal derivative, and a polyvinyl methylal derivative. Among them, a polyvinyl butyral derivative (hereinafter, it is also referred to as a "PVB derivative") is a derivative that is preferable. In this description, for examples, a polyvinyl butyral derivative includes polyvinyl butyral and derivatives thereof, and the same can be said for other polyvinyl acetal derivatives.

Hereinafter, polyvinyl butyral and derivatives thereof are cited for explanation as particularly preferable examples of polyvinyl acetal, but are not limited to these.

Polyvinyl butyral has a structure as shown below, and is constituted while including these structural units, and L is preferably 50 mol% and more.

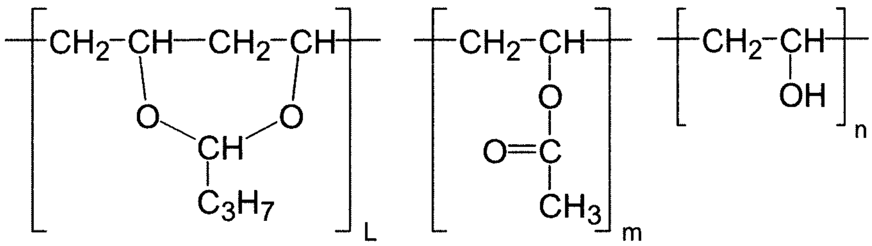

In formula, L, m and n represent the content of each structural units by mol%.

The PVB derivative is also available as a commercial product, and preferred examples thereof include, from the viewpoint of alcohol dissolving capability (particularly, ethanol), "S-REC B" series and "S-REC K (KS)" series manufactured by SEKISUI CHEMICAL CO., LTD. and "DENKA BUTYRAL" manufactured by DENKI KAGAKU KOGYO KABUSHIKI KAISHA. From the viewpoint of alcohol dissolving capability (particularly, ethanol), "S-REC B" series manufactured by SEKISUI CHEMICAL CO., LTD. and "DENKA BUTYRAL" manufactured by DENKI KAGAKU KOGYO KABUSHIKI KAISHA are more preferable. Among these, particularly preferable commercial products are shown below along with the values L, m, and n in the above formulae and the molar weight. Examples of "S-REC B" series manufactured by SEKISUI CHEMICAL CO., LTD. include "BL-1" (L=61, m=3, n=36, weight-average molecular weight: 19,000), "BL-1 H" (L=67, m=3, n=30, weight-average molecular weight: 20,000), "BL-2" (L=61, m=3, n=36, weight-average molecular weight: about 27,000), "BL-5" (L=75, m=4, n=21, weight-average molecular weight: 32,000), "BL-S" (L=74, m=4, n=22, weight-average molecular weight: 23,000), "BM-S" (L=73, m=5, n=22, weight-average molecular weight: 53,000), and "BH-S" (L=73, m=5, n=22, weight-average molecular weight: 66,000), examples of "DENKA BUTYRAL" manufactured by DENKI KAGAKU KOGYO include "#3000-1" (L=71, m=1, n=28, weight-average molecular weight: 74,000), "#3000-2" (L=71, m=1, n=28, weight-average molecular weight: 90,000), "#3000-4" (L=71, m=1, n=28, weight-average molecular weight: 117,000), "#4000-2" (L=71, m=1, n=28, weight-average molecular weight: 152,000), "#6000-C" (L=64, m=1, n=35, weight-average molecular weight: 308,000), "#6000-EP" (L=56, m=15, n=29, weight-average molecular weight: 381,000), "#6000-CS" (L=74, m=1, n=25, weight-average molecular weight: 322,000), and "#6000-AS" (L=73, m=1, n=26, weight-average molecular weight: 242,000), and examples of "MOWITAL" manufactured by KURARAY CO., LTD. include "B60H" (L=71, m=1, n=28, weight-average molecular weight: 140,000), "B60HH" (L=80, m=1, n=19, weight-average molecular weight: 190,000), and "B30HH" (L=80, m=1, n=19, weight-average molecular weight: 130,000).

When the relief-forming layer is formed using the PVB derivative, a method of casting and drying a solution which comprises a solvent is preferable from the viewpoint of smoothness of the film surface.

The content of the binder polymer in the cured resin sheet is preferably 2 to 95 mass%, and more preferably 30 to 80 mass%, relative to the total solids content by mass excluding volatile components such as solvent.

Furthermore, the content of the binder polymer in the curable resin composition used in the present invention is preferably 2 to 95 mass%, and more preferably 30 to 80 mass%, relative to the total solids content by mass excluding volatile components such as solvent.

When the content of the binder polymer is within this range, the flexographic printing plate precursor is excellent in terms of tackiness.

Solvent

The cured resin sheet is preferably formed from a curable resin composition comprising a solvent.

The solvent used is preferably an organic solvent. It is preferable to select and use as a main component an organic solvent that is a good solvent for dissolving the binder polymer added.

Specific preferred examples of the aprotic organic solvent include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, *N,N*-dimethylacetamide, *N*-methylpyrrolidone, and dimethyl sulfoxide.

Specific preferred examples of the protic solvent include water, methanol, ethanol, 1-propanol, 2-propanol, 1-butanol, 1-methoxy-2-propanol, ethylene glycol, diethylene glycol, and 1,3-propanediol.

Among them, propylene glycol monomethyl ether acetate can be cited as a particularly preferred example of the solvent.

A resin sheet is formed by coating a sheet-shaped support with the resin composition at a uniform thickness and then removing the solvent. By curing this resin sheet by means of heat and/or light a cured resin sheet is formed.

With regard to the resin sheet and the cured resin sheet, the thickness thereof is set as appropriate; it is preferably 0.1 to 5 mm, more preferably 0.3 to 3 mm, and particularly preferably 0.5 to 2.0 mm.

As the sheet-shaped support, a support, such as polyethylene terephthalate (PET), that is flexible and is not swollen by the solvent in the resin composition is preferably used. The thickness thereof is selected as appropriate, and

is preferably 0.2 to 0.05 mm.

<Crosslinking agent>

The cured resin sheet preferably comprises a crosslinking agent from the viewpoint of forming a crosslinked structure and obtaining physical properties suitable for use as a printing plate.
Furthermore, in the present invention, from the viewpoint of forming a crosslinked structure and obtaining physical properties suitable for use as a printing plate, the resin composition preferably comprises a crosslinking agent.
The crosslinking agent that can be used in the present invention may be used without any particular limitations as long as a relief-forming layer can be cured by increase in molecular weight due to a chemical reaction caused by heat (a radical polymerization reaction, a crosslinking reaction using an acid or a base as an initiating species, etc.). In particular, (1) an ethylenically unsaturated group-containing compound (hereinafter, also called a 'polymerizable compound' or an 'ethylenically unsaturated compound') or (2) an $-SiR^1R^2R^3$-containing crosslinking agent ($R^1$ to $R^3$ independently denote a hydrogen atom, a halogen atom, or a monovalent organic group. At least one of $R^1$ to $R^3$ is an alkyl group, an aryl group, an alkoxy group, a hydroxy group, or a halogen atom) is preferably used.
The cross-linking agents may form a crosslinked structure within the thermally cured layer by reacting with the binder, or may form a crosslinked structure by reacting with other polymerizable compounds.
The molecular weight of these crosslinking agents is not particularly limited, but is preferably 50 to 3,000, more preferably 70 to 2,500, and yet more preferably 100 to 2,000.
From the viewpoint of flexibility and brittleness of a crosslinked film, the total content of the crosslinking agent in the cured resin sheet is preferably in the range of 10 to 60 wt% relative to the total solids content by mass and more preferably in the range of 15 to 45 mass%.
From the viewpoint of flexibility and brittleness of a crosslinked film, the total content of the crosslinking agent in the curable resin composition is preferably in the range of 10 to 60 mass% relative to the total solids content by mass and more preferably in the range of 15 to 45 mass%.

<Polymerization initiator>

When the cured resin sheet comprises a polymerizable compound as the crosslinking agent, it is preferable for the sheet to comprise a polymerization initiator, and more preferably a radical polymerization initiator.
Furthermore, when the curable resin composition used in the present invention comprises a polymerizable compound as the crosslinking agent, it is preferable for it to comprise a polymerization initiator, and more preferably a radical polymerization initiator.
With regard to the polymerization initiator, those known to a person skilled in the art may be used without any limitations. The radical polymerization initiator, which is a preferred polymerization initiator, is explained in detail below, but the present invention should not be construed as being limited by these descriptions.
In the present invention, preferable polymerization initiators include (a) aromatic ketones, (b) onium salt compounds, (c) organic peroxides, (d) thio compounds, (e) hexaallylbiimidazole compounds, (f) ketoxime ester compounds, (g) borate compounds, (h) azinium compounds, (i) metallocene compounds, (j) active ester compounds, (k) compounds having a carbon halogen bond, and (l) azo compounds. Hereinafter, although specific examples of the (a) to (l) are cited, the present invention is not limited to these.
The (a) aromatic ketones, (b) onium salt compounds, (d) thio compounds, (e) hexaallylbiimidazole compounds, (f) ketoxime ester compounds, (g) borate compounds, (h) azinium compounds, (i) metallocene compounds, (j) active ester compounds, and (k) compounds having a carbon halogen bonding may preferably include compounds described in paragraphs 0074 to 0118 of JP-A-2008-63554.
A polymerization initiator can be divided into a photopolymerization initiator and a thermopolymerization initiator.
Furthermore, in the present invention when a thermopolymerization initiator is used to prepare the cured resin sheet, organic peroxides are preferably used.
Examples of organic peroxides preferably include 3,3',4,4'-tetra(*t*-butylperoxycarbonyl)benzophenone, 3,3',4,4'-tetra(*t*-amylperoxycarbonyl)benzophenone, 3,3',4,4'-tetra(*t*-hexylperoxycarbonyl)benzophenone, 3,3',4,4'-tetra(*t*-octylperoxycarbonyl)benzophenone, 3,3',4,4'-tetra(cumylperoxycarbonyl)benzophenone, 3,3',4,4'-tetra(*p*-isopropylcumylperoxycarbonyl)benzophenone, di-*t*-butyldiperoxyisophthalate, *t*-butylperoxybenzoate, *t*-butylperoxy-3-methylbenzoate, *t*-butylperoxylaurate, *t*-butylperoxypivalate, *t*-butylperoxy-2-ethylhexanoate, *t*-butylperoxy-3,5,5-trimethylhexanoate, *t*-butylperoxyneoheptanoate, *t*-butylperoxyneodecanoate, and *t*-butylperoxyacetate, α,α'-di(*t*-butylperoxy)diisopropylbenzene, *t*-butylcumylperoxide, di-*t*-butylperoxide, *t*-butylperoxyisopropylmonocarbonate, and *t*-butylperoxy-2-ethylhexylmonocarbonate, and *t*-butylperoxybenzoate is more preferable.
When a photopolymerization initiator is used in the cured resin sheet as the radical polymerization initiator, as a specific example thereof it is preferable to use an acetophenone, and the use thereof in combination with benzophenone

is preferable.

With regard to the polymerization initiator in the present invention, one type may be used on its own or two or more types may be used in combination.

Furthermore, the content of the polymerization initiator in the curable composition used in the present invention is preferably 0.01 to 10 mass% of the total solids content by mass of the resin composition, and more preferably 0.1 to 3 mass%.

<Filler>

The cured resin sheet preferably comprises a filler.

The curable resin composition used in the present invention preferably comprises a filler.

The filler in the present invention is not particularly limited as long as it disperses in the form of a solid in the cured resin sheet or the curable resin composition.

Examples of the filler that can be used in the present invention include an organic filler and an inorganic filler, and among them carbon black is particularly preferable since it is also suitable as a photothermal conversion agent.

Examples of the organic fillers include low density polyethylene particles, high density polyethylene particles, polystyrene particles, various organic pigments, micro balloons, urea-formalin fillers, polyester particles, cellulose fillers, organic metals, etc.

As carbon black, only if there is no such problem as dispersion instability in the resin composition, any of carbon blacks usually used for various applications such as coloring, rubber and dry battery is used, in addition to products falling within standards classified by ASTM.

The carbon black cited here also includes, for example, furnace black, thermal black, channel black, lampblack, acetylene black, etc.

In the present invention, it is also possible to use carbon blacks having a relatively low specific surface area and relatively low DBP (Dibutyl phthalate) absorption, and microfabricated carbon blacks having a large specific surface area.

Examples of the favorable commercial products of carbon black include Printex U (registered trade mark), Printex A (registered trade mark) and Spezialschwarz 4 (registered trade mark) (all are manufactured by Degussa), SEAST 600 ISAF-LS (Tokai Carbon Co., Ltd.), Asahi #70 (N-300) (ASAHI CARBON CO., LTD.), KETJEN BLACK EC600JD (Lion Corporation), etc.

With regard to the selection of such carbon blacks, for example, "Carbon Black Handbook" edited by Carbon Black Association may be referred to.

Examples of the inorganic fillers include alumina, titania, zirconia, kaolin, calcined kaolin, talc, pagodite, diatomite, calcium carbonate, aluminum hydroxide, magnesium hydroxide, zinc oxide, lithopone, amorphous silica, colloidal silica, calcined gypsum, silica, magnesium carbonate, titanium oxide, alumina, barium carbonate, barium sulfate, mica, etc.

Among them, silica and alumina are preferable, silica is more preferable and sperical silica is yet more preferable.

The form of the filler used in the present invention is not particularly limited, but a spherical form, a layered form, a fibrous form and a hollow balloon form may be cited. Among these, a spherical form and a layered form are preferable, and a spherical form is more preferable.

An average particle diameter (average primary particle diameter) of fillers used in the present invention is preferably 10 nm to 10 μm, more preferably 10 nm to 5 μm, and particularly preferably 50 nm to 3 μm. The diameter in the above-mentioned range makes the stability of the resin composition good, and can suppress the generation of film omission after engraving to thus make the image quality excellent.

As silica used in the present invention, spherical silica particles are preferable, and commercial products shown below are exemplified preferably. Numerals in parentheses denote the average particle diameter.

Specific examples of products by EVONIK INDUSTRIES include AEROSIL RM50 (40 nm), R711 (12 nm), R7200 (12 nm), AEROSIL OX50 (40 nm), 50 (30 nm), 90G (20 nm), 130 (16 nm), 150 (14 nm), 200 (12 nm), 200 CF (12 nm), 300 (7 nm) and 380 (7 nm).

Specific examples of products by AGC Si-Tech. Co., Ltd. include SUNSPHERE H-31 (3 μm), H-51 (5 μm), H-121 (12 μm), H-201 (20 μm), SUNSPHERE L-31 (3 μm), L-51 (5 μm), SUNSPHERE NP-30 (4 μm), NP-100 (10 μm) and NP-200 (20 μm).

Specific examples of products by Nissan Chemical Industries, Ltd. include methanol silica sol (10 to 20 nm), MA-ST-M (10 to 20 nm), IPA-ST (10 to 20 nm), EG-ST (10 to 20 nm), EG-ST-ZL (70 to 100 nm), NPC-ST (10 to 20 nm), DMAC-ST (10 to 20 nm), MEK-ST (10 to 20 nm), XBA-ST (10 to 20 nm) and MIBK-ST (10 to 20 nm).

Specific examples of products by FUJI SILYSIA CHEMICAL LTD. Include Sylysia series and Sylosphere series (C-1504 etc.).

Furthermore, the inorganic filler is preferably porous particles or nonporous particles.

The porous particles referred to here are defined as particles having micropores having a pore volume of at least 0.1 mL/g in the particle or particles having microcavities.

The porous particles preferably have a specific surface area of at least 10 $m^2/g$ but no greater than 1,500 $m^2/g$, an average pore diameter of at least 1 nm but no greater than 1,000 nm, a pore volume of at least 0.1 mL/g but no greater than 10 mL/g, and an oil adsorption of at least 10 mL/100 g but no greater than 2,000 mL/100 g. The specific surface area is determined based on the BET method from a nitrogen adsorption isotherm at -196°C. Furthermore, it is preferable to use a nitrogen adsorption method for measurement of the pore volume and the average pore diameter. Measurement of oil adsorption may desirably be carried out in accordance with JIS-K5101.

The number-average particle size of the porous particles is preferably at least 0.01 μm but no greater than 10 μm, more preferably at least 0.5 μm but no greater than 8 μm, and yet more preferably at least 1 μm but no greater than 5 μm.

The shape of the porous particles is not particularly limited, and spherical, flat-shaped, needle-shaped, or amorphous particles, or particles having projections on the surface, etc. may be used.

Furthermore, particles having a cavity in the interior, spherical granules having a uniform pore diameter such as a silica sponge, etc. may be used. Examples thereof are not particularly limited but include porous silica, mesoporous silica, a silica-zirconia porous gel, porous alumina, and a porous glass. Furthermore, as for a layered clay compound, pore diameter cannot be defined for those having a cavity of a few nm to a few hundred nm between layers, and in the present embodiment the distance between cavities present between layers is defined as the pore diameter.

Moreover, particles obtained by subjecting the surface of porous particles to a surface modifying treatment by covering with a silane coupling agent, a titanium coupling agent, or another organic compound so as to make the surface hydrophilic or hydrophobic may also be used. With regard to these porous particles, one type or two or more types may be selected.

The nonporous particles are defined as particles having a pore volume of less than 0.1 mL/g. The number-average particle size of the nonporous particles is the number-average particle size for primary particles as the target, and is preferably at least 10 nm but no greater than 500 nm, and more preferably at least 10 nm but no greater than 100 nm.

The amount of filler added in the cured resin sheet is preferably 0.5 to 20 mass% relative to the total solids content (the amount excluding volatile components such as solvent), more preferably 1 to 15 mass%, and particularly preferably 3 to 10 mass%.

<Photothermal conversion agent>

The cured resin sheet preferably comprise a photothermal conversion agent.

Furthermore, the resin composition used in the present invention preferably comprises a photothermal conversion agent.

It is surmised that the photothermal conversion agent adsorbs laser light to thus generate heat, thereby promoting thermal decomposition of a cured material at the time of laser engraving. Because of this, it is preferable to select a photothermal conversion agent that absorbs light at the wavelength of the laser used for engraving.

With regard to carbon black or various types of pigment or dye in the filler described above, those functioning also as photothermal conversion agents are included.

When the cylindrical printing plate precursor of the present invention is subjected to laser engraving using a laser emitting infrared at 700 to 1,300 nm (a YAG laser, a semiconductor laser, a fiber laser, a surface emitting laser, etc.) as a light source, it is preferable to use as a photothermal conversion agent a compound that can absorb light at a wavelength of 700 to 1,300 nm.

In the present invention, as the photothermal conversion agent that can absorb light having a wavelength at 700 to 1,300 nm, various dyes and pigments can be used.

With regard to the photothermal conversion agent, examples of dyes that can be used include commercial dyes and known dyes described in publications such as 'Senryo Binran' (Dye Handbook) (Ed. by The Society of Synthetic Organic Chemistry, Japan, 1970). Specific examples include dyes having a maximum absorption wavelength at 700 to 1,300 nm, and preferable examples include azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium colorants, pyrylium salts, and metal thiolate complexes. In particular, cyanine-based colorants such as heptamethine cyanine colorants, oxonol-based colorants such as pentamethine oxonol colorants, and phthalocyanine-based colorants are preferably used. Examples include dyes described in paragraphs 0124 to 0137 of JP-A-2008-63554.

With regard to the photothermal conversion agent used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saishin Ganryo Ouyogijutsu' (Latest Applications of Pigment Technology) (CMC Publishing, 1986), and 'Insatsu Inki Gijutsu' (Printing Ink Technology) (CMC Publishing,

1984). Examples of pigments include pigments described in paragraphs 0122 to 0125 of JP-A-2009-178869.

Among these pigments, carbon black is preferable.

Carbon black not only has a function as the filler but also has a function as a photothermal conversion agent that can absorb light having a wavelength at 700 to 1,300 nm, and is preferably used in the present invention. Examples of carbon black include those described in paragraphs 0130 to 0134 of JP-A-2009-178869.

The photothermal conversion agent in the resin composition of the present invention may be used singly or in a combination of two or more compounds.

The total content of the photothermal conversion agent in the cured resin sheet invention may vary greatly with the magnitude of the molecular extinction coefficient inherent to the molecule, but the content is preferably 0.01 to 30 mass%, more preferably 0.05 to 20 mass%, and particularly preferably 0.1 to 10 mass%, relative to the total solids content.

The content of the photothermal conversion agent in the resin composition in the present invention may vary greatly with the magnitude of the molecular extinction coefficient inherent to the molecule, but the content is preferably 0.01 to 30 mass%, more preferably 0.05 to 20 mass%, and particularly preferably 0.1 to 10 mass%, relative to the total mass total solids content.

<Plasticizer>

The cured resin sheet may comprise a plasticizer.

Furthermore, the resin composition used in the present invention may comprise a plasticizer.

The plasticizer is an organic solvent having a high boiling point, is preferably a compound having a boiling point no less than 100°C, and is more preferably a compound having that no less than 120°C. The plasticizer has preferably a molecular weight of no less than 400, and more preferably has that of 400 - 1,000.

The plasticizer has the function of softening the cured resin sheet or a film formed from the resin composition and compounds compatible with the binder polymer are used.

Preferred examples of the plasticizer used include dioctyl phthalate, didodecyl phthalate, bisbutoxyethyl adipate, a polyethylene glycol, polypropylene glycol (monool type or diol type) and polyetheresters.

Examples of polyetherester plasticizers include products of ADEKA CRPORATION such as ADK CIZER RS series and W-260 and W-262 of DIC Corporation.

With regard to the plasticizer in the resin composition of the present invention, one type may be used on its own, or two or more types may be used in combination.

From the viewpoint of maintaining flexible film physical properties, the content of the plasticizer in the cured resin sheet is preferably no greater than 50 mass% of the total solids content, more preferably no greater than 30 mass%, and yet more preferably no greater than 10 mass%, and it is particularly preferable that none is added.

<Other additives>

The cured resin sheet may comprise various types of additives as appropriate in a range that does not impair the effect of the present invention.

Furthermore, the resin composition used in the present invention may comprise various types of additives as appropriate in a range that does not impair the effect of the present invention. Examples include a wax, a metal oxide, an antiozonant, an antioxidant, a thermal polymerization inhibitor, a colorant, and a fragrance, and one type thereof may be used on its own or two or more types thereof may be used in combination.

In the process for producing a cylindrical printing plate precursor of the present invention, it is preferable that the polymerization initiator is a photopolymerization initiator and curing step (4) is photocuring step (4a), or the polymerization initiator is a thermopolymerization initiator and curing step (4) is thermal curing step (4b).

When curing the resin composition, a layer provided by coating on a support at a uniform thickness is subjected to photocuring and/or thermal curing. When curing, the resin composition may be cured in a flat state together with the support or may be cured in a cylindrical state around the outer periphery of a cylindrical support.

A case in which a cured resin sheet that has been cured in a substantially flat state is wrapped around a cylindrical support is explained as a representative example.

<(2) Wrapping step of wrapping cured resin sheet around cylindrical support>

The process for producing a cylindrical printing plate precursor of the present invention comprises (2) a wrapping step of wrapping a cured resin sheet around the outer periphery of a cylindrical support. In this case, the cured resin sheet may be integral with a flexible support.

When the cured resin sheet is long, it is first of all cut into a quadrilateral shape having appropriate width and length, and preferably a rectangular shape, and it is then placed directly or indirectly on the outer periphery of a cylindrical

support. When it is placed indirectly, a case in which a cushion layer is disposed therebetween is included. The width of the cured resin sheet is preferably slightly smaller than the width in the direction of the center axis of the cylindrical support, and the length thereof is preferably slightly smaller than the outer periphery of the cylindrical support. It is preferable for the length to be such that when the cured resin sheet is made to abut against itself, there is a gap in the section where it is to be joined. The curable composition is supplied to this gap and cured in the following supply step.

In an embodiment in which opposite ends of the cured resin sheet are made to abut against each other, they are preferably linear, and they may be perpendicular to or inclined relative to cylinder faces on opposite sides of the cylindrical support.

A material and a structure used for the cylindrical support are not particularly limited as long as it can be mounted on a printing cylinder. Examples include a cylinder made of metal, rubber, or plastic, or a hollow cylindrical support such as a sleeve made of metal, plastic, or fiber-reinforced plastic, and from the viewpoint of weight and ease of handling a hollow cylindrical support is preferable.

Examples of the material forming the metal cylinder or the metal sleeve include aluminum, nickel, iron, and an alloy thereof.

Examples of the material forming the plastic cylinder or the plastic sleeve include polyester, polyimide, polyamide, polyphenylene ether, polyphenylene thioether, polysulfone, and an epoxy resin.

Examples of the fiber material forming the fiber-reinforced plastic sleeve include a polyester fiber, a polyimide fiber, a polyamide fiber, a polyurethane fiber, a cellulose fiber, a glass fiber, a metal fiber, a ceramic fiber, and a carbon fiber.

Examples of the material forming the rubber cylinder include ethylenepropylene-diene (EPDM) rubber, fluorine rubber, silicone rubber, styrene-butadiene (SB) rubber, and urethane rubber.

The cured resin sheet may be wrapped around a cushion layer previously disposed on a cylindrical support.

When the cylindrical support is a hollow cylindrical support, the thickness of the hollow cylindrical support is preferably at least 0.2 mm but no greater than 2 mm, more preferably at least 0.3 mm but no greater than 1.5 mm, and yet more preferably at least 0.4 mm but no greater than 1 mm. When the thickness of the hollow cylindrical support is within this range, mounting thereof on an air cylinder is easy and sufficient mechanical strength can be maintained without bending or cracking.

A cushion layer may be disposed between the cured resin sheet and the cylindrical support.

Furthermore, when this cushion layer is affixed to the outer periphery of the cylindrical support, a pressure-sensitive adhesive layer or an adhesive layer may be disposed on the cylindrical support side or on the cushion layer side. A cured resin sheet with a pressure-sensitive adhesive layer or an adhesive layer may be wrapped around the outer periphery of a cylindrical support. Alternatively, a pressure-sensitive adhesive layer or an adhesive layer may be provided on the outer periphery of a cylindrical support and a cured resin sheet may be wrapped therearound.

An outer face of the cylindrical support may be subjected to a physical and/or chemical treatment in order to promote adhesion between the cylindrical support and the cured resin sheet. Examples of the physical treatment method include a sandblasting method, a wet blasting method in which a liquid containing particles is sprayed, a corona discharge treatment method, a plasma treatment method, and a UV or vacuum UV irradiation method. Examples of the chemical treatment method include a strong acid/strong alkali treatment method, an oxidizing agent treatment method, and a coupling agent treatment method.

<(3) Supply step of supplying curable composition to gap formed between parts of cured resin sheet to be joined >

After the wrapping step in which a cured resin sheet is wrapped around the outer periphery of a cylindrical support, a curable composition is supplied to a gap formed in the section where end parts are joined (supply step).

<(4) Curing step of curing curable composition>

After the supply step, the curable composition supplied to the gap is cured.

The curable composition comprises a curable component as an essential component, preferably comprises a resin, and further comprises as an essential component a solvent that dissolves or swells the cured resin sheet in a predetermined range.

Specific curing means used in the curing step is selected from heating or irradiation with light according to the curable composition used. They are explained in detail later.

<Resin to be added to curable composition>

The curable resin composition preferably comprises a resin, and the type of resin may be selected as appropriate. The resin added to the curable composition for joining end parts of the cured resin sheet preferably has the property of being compatible with the cured resin sheet at the interface or at least providing interfacial adhesion.

Specifically, preferred examples of polymer compounds include resins that are solid at 20°C such as acrylic resins, which have a wide variety of adhesive properties and chemical properties, a rubber-based polymer compound having high hardness rubber elasticity such as a synthetic rubber or a thermoplastic elastomer, or a thermoplastic resin having a high modulus of elasticity, and resins that are liquid at 20°C such as an unsaturated polyurethane, unsaturated polyester, or liquid polybutadiene having a polymerizable unsaturated group in the molecule.

More specifically, examples of the acrylic resin include a homopolymer or a copolymer of methyl methacrylate, ethyl methacrylate, lauryl methacrylate, isobornyl methacrylate, methacrylic acid, 2-hydroxyethyl methacrylate, tetramethylpiperidinyl methacrylate, ethylene glycol dimethacrylate, diethylene glycol dimethacrylate, polyethylene glycol dimethacrylate, trimethylolpropane trimethacrylate, pentaerythritol dimethacrylate, pentaerythritol trimethacrylate, a methacrylic acid adduct of bisphenol A diglycidyl ether, ethylene oxide-modified bisphenol A dimethacrylate, etc.

The rubber-based polymer compound is preferably natural rubber, styrene butadiene rubber, acrylonitrile butadiene rubber, polybutadiene rubber, polyisoprene rubber, ethylene propylene rubber, or a polymer of a monovinyl-substituted aromatic hydrocarbon monomer and a conjugated diene monomer.

As the monovinyl-substituted aromatic hydrocarbon monomer, styrene, $\alpha$-methylstyrene, *p*-methylstyrene, *p*-methoxystyrene, etc. are used, as the conjugated diene monomer, butadiene, isoprene, etc. are used, and representative examples of the thermoplastic elastomer include a styrene-butadiene block copolymer and a styrene-isoprene block copolymer. Examples of the thermoplastic resin having a high modulus of elasticity include polycarbonate, polysulfone, polyether sulfone, polyamide, polyamic acid, polyester, and polyphenylene ether. When it is a resin that is solid at 20°C, one that is soluble in a solvent is particularly preferable.

The curable composition particularly preferably comprises a resin selected from the group consisting of an acrylic resin, a polyester resin, a polyconjugated diene, and an epoxy resin.

With regard to a preferred combination of the binder of the curable resin sheet and the resin of the curable composition, a preferred embodiment is that the binder and the resin are of a common polymer, but when they are not of a common polymer, it is preferable that if the binder is a thermoplastic or thermosetting resin, the curable composition is also a thermoplastic or themosetting resin, and if the binder is a rubber the curable composition is also a rubber. Furthermore, the smaller the difference in solubility parameter (SP) value, the more preferable it is, and the difference is preferably no greater than 2.0.

Here, the SP value is the solubility parameter and is a parameter calculated by the Okitsu method (Journal of the Adhesion Society of Japan Vol.29, No.5 (1993)). The SP value is obtained by adding the molar attraction constants of each of the atomic groups of a compound and dividing by the molar volume.

With regard to specific examples of the preferred combination, polyurethane and an acrylic resin, polyurethane and a polyester resin, polyurethane and an epoxy resin, polyvinyl alcohol and an acrylic resin, polyvinyl alcohol and a polyester resin, polyvinyl alcohol and an epoxy resin, an acrylic resin and a polyester resin, polybutadiene and polystyrene, polybutadiene and polynitrile-butadiene, and polystyrene and polynitrile-butadiene are preferable, and in addition polyurethane and polybutadiene, polyurethane and polystyrene, polyurethane and polynitrile-butadiene, polyvinyl alcohol and polybutadiene, polyvinyl alcohol and polystyrene, polyvinyl alcohol and polynitrile-butadiene, an acrylic resin and polybutadiene, an acrylic resin and polystyrene, and an acrylic resin and polynitrile-butadiene are acceptable.

<Curable component in curable composition>

The curable composition comprises a curable component. The curable component is a material that cures due to self-reaction of a single component or cross reaction of a plurality of components. As the curable component, selection is possible from a wide variety of known materials, but a polymerizable compound is preferably used. As the polymerizable compound, an ethylenically unsaturated compound or a cyclic ether compound is preferably used. The ethylenically unsaturated compound includes monofunctional and polyfunctional compounds, and it is preferable to use a mixture thereof. As the cyclic ether compound, an epoxy compound or an oxetane compound may preferably be used. As the epoxy compound, either an epoxy compound having an alicyclic structure or an epoxy compound not having an alicyclic structure may be used, and it is also preferable to use the two in combination. The cyclic ether compound also includes monofunctional and polyfunctional compounds.

It is preferable to use a catalyst or a promoter in a curing reaction of the curable component. When an ethylenically unsaturated compound is used as the curable component, a thermopolymerization initiator or a photopolymerization initiator is preferably used in combination.

The ethylenically unsaturated compound that can preferably be used in the curable composition is the same as an ethylenically unsaturated compound used as a crosslinking agent for producing a cured resin sheet, and it is explained in detail later.

It is preferable to use a polymerization initiator in a combination with the curable component, and when the curable component is radically polymerizable, it is preferable to use a radical polymerization initiator. The radical polymerization initiator that is added to the curable composition is explained later. When the curable component is cationically

polymerizable, a cationic polymerization initiator may be used.

Furthermore, in order to attain the object of reducing the percentage dimensional change during curing, it is preferable to add a curable component that is less susceptible to volume change due to curing, and one preferred example of such a compound is an epoxy resin having a ring-opening polymerizable group such as an epoxy group. Specific examples include a bisphenol A epoxy resin, a bisphenol F epoxy resin, a phenol novolac epoxy resin, a bisphenol AD epoxy resin, a biphenyl epoxy resin, a naphthalene epoxy resin, an alicyclic epoxy resin, a glycidyl ester epoxy resin, a glycidylamine epoxy resin, a heterocyclic epoxy resin, a diarylsulfone epoxy resin, a hydroquinone epoxy resin, and modified derivatives thereof. These may be used on their own or in combination.

The number-average molecular weight of a resin added to the curable resin composition is preferably in a range of at least 1,000 but no greater than 300,000, more preferably at least 5,000 but no greater than 100,000, and particularly preferably at least 7,000 but no greater than 50,000. In the present invention, the number-average molecular weight is a value measured by gel permeation chromatography (GPC) and converted using polystyrene having a known molecular weight.

<Content of solvent that dissolves or swells cured resin sheet>

The curable composition comprises a solvent as an essential component.

Here, the solvent means a low-boiling-point organic solvent, and the boiling point is preferably less than 120°C, and more preferably less than 100°C. The boiling point is preferably at least 30°C, and more preferably at least 40°C.

This solvent has the property of dissolving components in the curable composition and at the same time dissolving or swelling the cured resin sheet. It is surmised that by virtue of the action of a solvent having dissolving and swelling properties, the curable composition and the section where end parts of the cured resin sheet are to be joined attain a relationship of being compatible with each other at the interface, although this may be partial.

When the cured resin sheet is provided on a flexible support, it is sufficient for the solvent to dissolve or swell the cured resin sheet, and it is unnecessary for it to dissolve or swell the support.

The curable composition functions as an adhesive for bonding a section where end parts of the curable resin sheet are joined, and the content of the solvent in the curable composition is 0.2 to 2.0 mass%. When the solvent content is greater than 2.0 mass%, the dimensional change when it is volatilized cannot be ignored and the printing precision is degraded, and when it is less than 0.2 mass%, the adhesive power for end parts decreases. Because of this, the above content is necessary.

The content of the solvent is preferably at least 0.35 mass% but no greater than 1.5 mass%, and more preferably at least 0.5 mass% but no greater than 1.0 mass%.

The type of solvent is not particularly limited as long as it is a solvent for the components used in the curable composition and at the same time has the property of dissolving and/or swelling the cured resin sheet. In this way, the solvent is selected according to the type of cured resin sheet and the type of curable component.

The above solvent is selected as appropriate from organic solvents. Examples of the organic solvent include an alcohol such as methanol, ethanol (EtOH), isopropyl alcohol (IPA), or butanol; a (mono or poly)alkylene glycol (mono or poly)alkyl ether such as ethylene glycol monomethyl ether, ethylene glycol monoethyl ether, propylene glycol monomethyl ether, diethylene glycol monoethyl ether, diethylene glycol dimethyl ether, diethylene glycol diethyl ether, or dipropylene glycol dimethyl ether, or an acetate thereof; a diacetate such as propylene glycol diacetate or 1,3-butylene glycol diacetate; an ether such as tetrahydrofuran; a ketone such as acetone, methyl ethyl ketone, cyclohexanone, or 2-heptanone; an ester such as methyl 2-hydroxypropionate, ethyl 3-hydroxypropionate, ethyl acetate, n-butyl acetate, *i*-butyl acetate, *i*-butyl butyrate, n-butyl butyrate, ethyl 3-methoxypropionate, ethyl 3-ethoxypropionate, 3-methoxybutyl acetate, 3-methyl-3-methoxybutyl acetate, ethyl lactate, or cyclohexanol acetate; an aromatic hydrocarbon such as toluene or xylene; or water. The solvent used is selected from the viewpoint of the property of dissolving/swelling a curable resin sheet, the property of dissolving a curable composition, the ease of handling at normal temperature, and the ease of volatilization when carrying out curing.

The curable composition preferably comprises an aliphatic ester having 4 to 6 carbons or an aliphatic ketone having 3 to 5 carbons as a solvent.

When the curable resin sheet comprises a polyurethane resin, ethyl acetate, acetone, methyl ethyl ketone, and tetrahydrofuran are preferred solvents. When the curable resin sheet comprises polyvinyl alcohol, ethyl acetate, acetone, ethanol, isopropyl alcohol, methyl ethyl ketone, and tetrahydrofuran are preferred solvents.

<Ethylenically unsaturated compound added to curable composition>

The curable composition comprises a curable component. The curable component is preferably an ethylenically unsaturated compound. This ethylenically unsaturated compound preferably has an ethylenically unsaturated group content of 0.01 to 0.5 mmol per g of the curable composition.

The ethylenically unsaturated compound functions as a crosslinkable material. The ethylenically unsaturated compound may be monofunctional or polyfunctional; the type is not particularly limited as long as it has a polymerizable unsaturated double bond in the molecule, and it is preferable to use monofunctional and polyfunctional ethylenically unsaturated compounds in combination.

Specific examples of the ethylenically unsaturated compound include, as radically polymerizable compounds, an olefin such as ethylene, propylene, styrene, or divinylbenzene, (meth)acrylic acid or a derivative thereof, a haloolefin, an unsaturated nitrile such as acrylonitrile, (meth)acrylamide or a derivative thereof, an unsaturated dicarboxylic acid or a derivative thereof such as maleic anhydride, maleic acid, or fumaric acid, a vinyl acetate, *N*-vinylpyrrolidone, and *N*-vinylcarbazole.

From the viewpoint of available types, cost, etc., the ethylenically unsaturated compound is preferably (meth)acrylic acid or a derivative thereof, and more preferably a (meth)acrylic acid ester. Examples of the (meth)acrylic acid ester include an ester of (meth)acrylic acid and various types of monohydric or polyhydric alcohols such as an ester with an alicyclic alcohol such as a cycloalkyl alcohol, a bicycloalkyl alcohol, a cycloalkene alcohol, or a bicycloalkene alcohol, an ester with an aromatic-ring containing alcohol such as benzyl alcohol, phenyl alcohol (phenol), phenoxyethyl alcohol, or fluorene alcohol, and an ester with an aliphatic monohydric or polyhydric alcohol such as an alkyl alcohol, a haloalkyl alcohol, an alkoxyalkyl alcohol, a hydroxyalkyl alcohol, an aminoalkyl alcohol, tetrahydrofurfuryl alcohol, allyl alcohol, glycidyl alcohol, an alkylene glycol, a polyoxyalkylene glycol, an (alkyl/allyloxy)polyalkylene glycol, trimethylolpropane, or pentaerythritol.

In addition thereto, the curable composition may comprise as a curable component a compound having a polysiloxane structure such as polydimethylsiloxane or polydiethylsiloxane. Furthermore, it may comprise as a curable component a heteroaromatic compound containing an element such as nitrogen or sulfur.

The ethylenically unsaturated compound is particularly preferably phenoxyethyl (meth)acrylate, glycol di(meth)acrylate, or trimethylolpropane tri(meth)acrylate.

Examples of other curable components used in the curable composition include compounds having a cinnamoyl group, a thiol group, or an azido group.

As a curable component, a ring-opening polymerizable compound may also be used. Examples of the ring-opening polymerizable compound include, in addition to the compounds having a ring-opening polymerizable group such as an epoxy group or an oxetane group described above, a compound having a cyclic ester group, a dioxirane group, a spiroorthocarbonate group, a spiroorthoester group, a bicycloorthoester group, a cyclosiloxane group, or a cyclic iminoether group. Examples of particularly useful ring-opening polymerizable compounds include, as epoxy compounds having an epoxy group, compounds obtained by reaction between various polyols such as a diol or a triol and epichlorohydrin, and an epoxy compound obtained by reaction between an ethylene bond in the molecule and a peracid.

Specific examples of the useful epoxy compound include epoxy compounds such as ethylene glycol diglycidyl ether, diethylene glycol diglycidyl ether, triethylene glycol diglycidyl ether, tetraethylene glycol diglycidyl ether, polyethylene glycol diglycidyl ether, propylene glycol diglycidyl ether, tripropylene glycol diglycidyl ether, polypropylene glycol diglycidyl ether, neopentyl glycol diglycidyl ether, 1,6-hexanediol diglycidyl ether, glycerol diglycidyl ether, glycerol triglycidyl ether, trimethylolpropane triglycidyl ether, bisphenol A diglycidyl ether, hydrogenated bisphenol A diglycidyl ether, the diglycidyl ether of a compound in which ethylene oxide or propylene oxide is added to bisphenol A, polytetramethylene glycol diglycidyl ether, poly(propylene glycol adipate) diol diglycidyl ether, poly(ethylene glycol adipate) diol diglycidyl ether, and poly(caprolactone) diol diglycidyl ether, and an epoxy-modified silicone oil (trademark 'HF-105', Shin-Etsu Chemical Co., Ltd.).

From the viewpoint of ease of handling, the compound containing a plurality of ethylenically unsaturated groups preferably has a molecular weight of less than 1,000.

<Content of ethylenically unsaturated group in curable composition>

When an ethylenically unsaturated compound is added to the curable composition, the content of the ethylenically unsaturated group is defined as the content per g of the curable composition as explained below. In the case of a low molecular weight monomer, (one repeating unit of compound) corresponds to the molecular weight.

(Total amount of ethylenically unsaturated groups in curable composition) = (sum total of (ethylenically unsaturated groups of each compound in curable composition))

(Ethylenically unsaturated groups) = (content of compound in total amount of curable composition) × (number of ethylenically unsaturated groups per repeating unit of compound)/(molecular weight of one repeating unit of compound)

The ethylenically unsaturated group content in the curable composition is preferably no greater than 0.5 mmol/g in order to suppress dimensional change to within a predetermined range; it is more preferably 0.01 to 0.5 mmol/g, and particularly preferably 0.01 to 0.1 mmol/g.

<Polymerization initiator in curable composition>

When the curable component is a radically polymerizable ethylenically unsaturated compound, it is preferable to use a radical polymerization initiator in combination.

Preferable polymerization initiators include (a) aromatic ketones, (b) onium salt compounds, (c) organic peroxides, (d) thio compounds, (e) hexaallylbiimidazole compounds, (f) ketoxime ester compounds, (g) borate compounds, (h) azinium compounds, (i) metallocene compounds, (j) active ester compounds, (k) compounds having a carbon halogen bond, and (I) azo compounds.

The (a) aromatic ketones, (b) onium salt compounds, (d) thio compounds, (e) hexaallylbiimidazole compounds, (f) ketoxime ester compounds, (g) borate compounds, (h) azinium compounds, (i) metallocene compounds, (j) active ester compounds, and (k) compounds having a carbon halogen bonding may preferably include compounds described in paragraphs 0074 to 0118 of JP-A-2008-63554.

When incorporates a thermopolymerization initiator as a radical initiator, (c) organic peroxides and (I) azo compounds are preferable and (c) organic peroxides are particularly preferable. Moreover, (c) organic peroxides and (I) azo compounds are explained below.

(c) Organic peroxide

Preferred examples of the organic peroxide (c) that can be used in the present invention include peroxyester-based ones such as 3,3',4,4'-tetra(*t*-butylperoxycarbonyl)benzophenone, 3,3',4,4'-tetra(*t*-amylperoxycarbonyl)benzophenone, 3,3',4,4'-tetra(*t*-hexylperoxycarbonyl)benzophenone, 3,3',4,4'-tetra(*t*-octylperoxycarbonyl)benzophenone, 3,3',4,4'-tetra(cumylperoxycarbonyl)benzophenone, 3,3',4,4'-tetra(*p*-isopropylcumylperoxycarbonyl)benzophenone, di-*t*-butyldiperoxyisophthalate, *t*-butylperoxybenzoate, *t*-butylperoxy-3-methylbenzoate, *t*-butylperoxylaurate, *t*-butylperoxypivalate, *t*-butylperoxy-2-ethylhexanoate, *t*-butylperoxy-3,5,5-trimethylhexanoate, *t*-butylperoxyneoheptanoate, *t*-butylperoxyneodecanoate, and *t*-butylperoxyacetate, α,α'-di(*t*-butylperoxy)diisopropylbenzene, *t*-butylcumylperoxide, di-*t*-butylperoxide, *t*-butylperoxyisopropylmonocarbonate, and *t*-butylperoxy-2-ethylhexylmonocarbonate and *t*-butylperoxybenzoate is more preferable.

(I) Azo compounds

Preferable (I) azo compounds that can be used in the present invention include those such as 2,2'-azobisisobutyronitrile, 2,2'-azobispropionitrile, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobis(isobutyrate), 2,2'-azobis(2-methylpropionamideoxime), 2,2'-azobis[2-(2-imidazolin-2-yl)propane], 2,2'-azobis{2-methyl-*N*-[1,1-bis(hydroxymethyl)-2-hydroxyethyl]propionamide}, 2,2'-azobis[2-methyl-*N*-(2-hydroxyethyl)propionamide], 2,2'-azobis(*N*-butyl-2-methylpropionamide), 2,2'-azobis(*N*-cyclohexyl-2-methylpropionamide), 2,2'-azobis[*N*-(2-propenyl)-2-methyl-propionamide], 2,2'-azobis(2,4,4-trimethylpentane).

The curable composition of the present invention preferably comprises, relative to 100 parts by mass of the resin, 2 to 20 parts by mass of a curable component, 0.2 to 4 parts by mass of a solvent, 0 to 16 parts by mass of a polymerization initiator, and 0 to 45 parts by mass of an additive such as a filler.

In the curable composition of the present invention, with regard to the polymerization initiator, one type may be used on its own, or two or more types may be used in combination.

The total content of the polymerization initiator in the curable composition is preferably in the range of 0.01 to 10 mass% relative to the total solids content by mass, and more preferably in the range of 0.1 to 3 mass%.

<Percentage dimensional change on curing of curable composition>

A curable composition is made into a test sample piece, and the dimensional change on curing is measured.
Details of the test method are as described in Examples.
The dimensional change is due to evaporation of solvent or volume shrinkage of the curable component, and the overall dimensions become smaller after curing compared with those before curing; the percentage change is preferably within 2.0%, more preferably 0.3 to 1.8%, and yet more preferably 0.5 to 1.5%.

Other additives

The curable composition may comprise as appropriate various types of additives in a range that does not impair the effects of the present invention.
Furthermore, as the various types of additives in the curable composition that can be used in the present invention, there can be cited a filler, a metal oxide, an antiozonant, an antioxidant, a thermopolymerization inhibitor, and a colorant, and one type thereof may be used on its own or two or more types may be used in combination.
As the filler, a filler added to the cured resin sheet may be used.
Preferred embodiments of the cylindrical printing plate precursor of the present invention are explained.

-Cushion layer formation step-

The process for producing a cylindrical printing plate precursor of the present invention preferably comprises a cushion layer formation step of forming a cushion layer on the cylindrical support or a surface via which the cured resin sheet is affixed to the cylindrical support.
Furthermore, the cylindrical printing plate precursor of the present invention may have a cushion layer formed between the cylindrical support and the cured resin sheet.
As the cushion layer, an elastomer such as a foamed polyurethane and an elastomer having a Shore A hardness of at least 20 degrees but no greater than 70 degrees, and more preferably at least 20 degrees but no greater than 50 degrees may be used.

<Flattening step (a)>

The production process of the present invention preferably comprises a flattening step (a) of flattening the surface of the curable composition supplied between wrapping step (2) and curing step (4). The specific method for flattening is not particularly limited, but examples include a squeegee (squeegee) that removes by means of a blade surplus curable composition that has spread above the gap formed in a section where end parts are to be joined in supply step (3), a method in which surplus curable composition supplied in supply step (3) is flattened to the top level of the groove by affixing a PET film to a gap formed in a section where end parts are to be joined, and a method in which, after a step of closing in advance by means of a PET film an open end part of a groove forming a gap prior to supply step (3), a curable composition is poured into this closed space.
The production process of the present invention preferably comprises, between wrapping step (2) and supply step (3), a groove-forming step (b) of forming a groove between opposite end parts of the cured resin sheet. The groove-forming step is a step of machining at least one of the two end parts so that the gap has a constant shape. Examples include a groove having a constant width on a straight line and a groove in which zigzag shapes of opposite end parts are aligned.
The process for producing a cylindrical printing substrate of the present invention may comprise a known step as necessary other than the above steps.

<Laser engraving>

A cylindrical printing plate precursor obtained by the process for producing a cylindrical printing plate precursor of the present invention may be used suitably as a cylindrical printing plate precursor for laser engraving or as a plate-making material for a cylindrical printing plate obtained by laser engraving.
The laser engraving is preferably a step of laser-engraving corresponding to a desired image the recording layer to thus form a relief layer. Furthermore, a step in which the recording layer is subjected to scanning irradiation by controlling a laser head using a computer in accordance with digital data of a desired image can preferably be cited.
This laser engraving preferably employs an infrared laser. When irradiated with an infrared laser, molecules in the recording layer undergo molecular vibration, thus generating heat. When a high power laser such as a carbon dioxide laser or a YAG laser is used as the infrared laser, a large quantity of heat is generated in the laser-irradiated area, and

molecules in the recording layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for ink the groove to be blocked with ink, thus enabling breakup of an outline character to be suppressed.

In particular, when engraving is carried out using an infrared laser that corresponds to the absorption wavelength of the photothermal conversion agent, it becomes possible to selectively remove the recording layer at higher sensitivity, thus giving a relief layer having a sharp image.

As the infrared laser used in laser engraving, from the viewpoint of productivity, cost, etc., a carbon dioxide laser (a $CO_2$ laser) or a semiconductor laser is preferable. In particular, a fiber-coupled semiconductor infrared laser (FC-LD) is preferably used. In general, compared with a $CO_2$ laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm is preferable, one having a wavelength of 800 to 1,200 nm is more preferable, one having a wavelength of 860 to 1,200 nm is futher preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2nd Edition' The Laser Society of Japan, and 'Applied Laser Technology' The Institute of Electronics and Communication Engineers, etc.

Moreover, as plate making equipment comprising a fiber-coupled semiconductor laser that can be used suitably in the process for making a flexographic printing plate employing the flexographic printing plate of the present invention, those described in detail in JP-A-2009-172658 and JP-A-2009-214334 can be cited.

The present invention may as necessary further comprise, subsequent to the laser engraving, a rinsing step, a drying step, and/or a post-crosslinking step, which are shown below.

Rinsing step: a step of rinsing the engraved surface by rinsing the engraved relief layer surface with water or a liquid comprising water as a main component.

Drying step: a step of drying the engraved relief layer.

Post-crosslinking step: a step of further crosslinking the relief layer by applying energy to the engraved relief layer.

After the above-mentioned step, since engraved residue is attached to the engraved surface, a rinsing step of washing off engraved residue by rinsing the engraved surface with water or a liquid comprising water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin letterpress plate processor, and when slime due to engraved residue cannot be eliminated, a rinsing liquid to which a soap or a surfactant is added may be used.

When the rinsing step of rinsing the engraved surface is carried out, it is preferable to add a drying step of drying an engraved recording layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably at least 9, more preferably at least 10, and yet more preferably at least 11. The pH of the rinsing liquid is preferably no greater than 14, more preferably no greater than 13, and yet more preferably no greater than 12.5. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

The rinsing liquid preferably comprises a surface-active agent.

Another aspect of the present invention relates to a process for making a cylindrical printing plate, comprising a step of preparing the cylindrical printing plate precursor and an engraving step of laser-engraving the prepared cylindrical printing plate precursor.

Yet another aspect of the present invention relates to a cylindrical printing plate made by the plate-making

process.

Yet another aspect of the present invention relates to a process for making a cylindrical printing plate, comprising (1) a preparation step of preparing a printing plate sheet, (2) a wrapping step of wrapping the printing plate sheet around a cylindrical support, (3) a supply step of supplying a curable composition to a gap between opposite ends of the printing plate sheet, and (4) a curing step of curing the curable composition, the curable composition comprising a solvent that dissolves or swells the printing plate sheet, the solvent having a content of 0.2 to 2.0 mass% of the total amount of the curable composition, and the curable composition having a percentage dimensional change on curing of no greater than 2%.

A cylindrical printing substrate obtained by the process for producing a cylindrical printing substrate of the present invention is particularly suitably used in printing by means of a flexographic printer using an oil-based ink or a UV ink, but may also be used in printing by means of a printer for relief printing using either an oil-based ink or a UV ink.

Examples

The present invention is explained below by way of preferred examples of the present invention, but the present invention should not be construed as being limited to these examples.

(Production Example 1)

A 1 L separable flask equipped with a thermometer, a stirrer, and a reflux condenser was charged with 447.24 g of brand name 'PCDL L4672' (number-average molecular weight 1,990, OH group value 56.4), which is a polycarbonate diol manufactured by ASAHI KASEI CORPORATION, and 30.83 g of tolylene diisocyanate, and a reaction was carried out while heating at 80°C for about 3 hours; 14.83 g of 2-methacryloyloxyethyl isocyanate was added thereto, and a reaction was further carried out for about 3 hours, thus producing resin (a) having a terminal methacrylic group (about two polymerizable unsaturated groups in the molecule on average per molecule) and having a number-average molecular weight of about 10,000.

(Example 1)

(Formation of cured resin sheet)

Resin composition (b) was prepared by mixing 67 parts by mass of resin (a) obtained in the Production Example, 29 parts by mass of phenoxyethyl methacrylate as an ethylenically unsaturated compound, 3 parts by mass of porous fine powder silica ('Sylosphere (registered trademark) C-1504', Fuji Silysia Chemical Ltd.), 0.3 parts by mass of benzophenone and 0.4 parts by mass of 2,2-dimethoxy-2-phenylacetophenone as photopolymerization initiators, and 0.3 parts by mass of 2,6-di-*t*-butylacetophenone as a stabilizer. Resin composition (b) thus obtained was applied onto 100 μm thick polyethylene terephthalate (PET) as a sheet shape support using a doctor blade, thus forming a sheet-shaped photosensitive resin composition layer. Subsequently, the photosensitive resin composition layer thus obtained was photocured using a metal halide lamp, thus producing a cured resin sheet above the PET. This cured resin sheet was laser-engraveable, and the thickness was 1.7 mm.

(Formation of cylindrical cushion layer)

A cylindrical support made of a glass fiber-reinforced plastic and having an inner diameter of 213.3 mm, a width of 300 mm, and a thickness of 2.00 mm was carefully covered with a cushion tape equipped with an adhesive layer on one surface and formed from a foamed polyurethane such that the adhesive layer was adhered to the cylindrical support surface without bubbles entering therebetween, thus forming a cushion layer on the cylindrical support. Furthermore, a 25 μm thick double-sided tape was layered onto the cushion layer thus formed, thus producing a cylindrical body having an adhesive layer exposed on the surface.

(Preparation of curable composition)

63 parts by mass of an acrylic resin having a weight-average molecular weight of about 18,000 (RS-1190; Tg 72°C, SEIKO PMC CORPORATION), 20 parts by mass of the plasticizer ADK Cizer RS-540 (ADEKA), 4 parts by mass of phenoxyethyl methacrylate (molecular weight 190) and 1 part by mass of trimethylolpropane triacrylate (molecular weight 338), 8 parts by mass of porous fine powder silica ('Sylosphere (registered trademark) C-1504', Fuji Silysia Chemical Ltd.), 0.5 parts by mass of benzophenone and 1 parts by mass of 2,2-dimethoxy-2-phenylacetophenone as photopolymerization initiators, 0.5 parts by mass of 2,6-di-*t*-butylacetophenone as a stabilizer, and 2 parts by mass of

ethyl acetate as a solvent were mixed at a temperature of 60°C, thus preparing curable composition (c).

(Formation of cylindrical printing plate precursor and cylindrical printing plate)

The laser-engraveable cured resin sheet was carefully wrapped around the cylindrical body obtained as above such that no bubbles entered. A gap formed from a 5 mm wide recessed part was present in a section where opposite end parts of the cured resin sheet affixed onto the cylindrical body were to be joined. The seam formed from the 5 mm wide recessed part (depth being 1.8 mm as a total of the 1.7 mm thick laser-engraveable photosensitive resin cured material layer and the 0.1 mm thick PET film) was filled with curable composition (c) above, surplus curable composition was scraped off using a squeegee, the solvent was then removed at 80°C for 5 minutes, and photocuring was carried out using a metal halide lamp. The surface of the cylindrical printing plate precursor thus obtained was subjected to formation of a relief pattern using a high definition $CO_2$ Laser Marker ML-9100 series carbon dioxide laser engraving machine (Keyence Corporation) (output 12 W), thus giving a cylindrical printing plate.

(Example 2)

A cylindrical printing plate precursor and a cylindrical printing plate were obtained in the same manner as in Example 1 except that instead of curable composition (c) curable composition (d) having an amount of the resin in curable composition (c) added of 64 parts by mass and an ethyl acetate content of 1 part by mass was used.

(Example 3)

A cylindrical printing plate precursor and a cylindrical printing plate were obtained in the same manner as in Example 1 except that instead of curable composition (c) curable composition (e) having an amount of the resin in curable composition (c) added of 64.5 parts by mass and an ethyl acetate content of 0.5 parts by mass was used.

(Example 4)

A cylindrical printing plate precursor and a cylindrical printing plate were obtained in the same manner as in Example 1 except that instead of curable composition (c) curable composition (f) having an amount of the resin in curable composition (c) added of 64.8 parts by mass and an ethyl acetate content of 0.2 parts by mass was used.

(Example 5)

A cylindrical printing plate precursor and a cylindrical printing plate were obtained in the same manner as in Example 2 except that instead of curable composition (d) curable composition (g) containing methyl ethyl ketone (MEK) in place of the ethyl acetate of curable composition (c) was used, the composition otherwise being the same as curable composition (c).

(Example 6)

A cylindrical printing plate precursor and a cylindrical printing plate were obtained in the same manner as in Example 2 except that instead of curable composition (d) curable composition (h) containing acetone in place of the ethyl acetate of curable composition (c) was used, the composition otherwise being the same as curable composition (c).

(Example 7)

A cylindrical printing plate precursor and a cylindrical printing plate were obtained in the same manner as in Example 2 except that instead of curable composition (d) curable composition (j) having an amount of the resin in curable composition (d) added of 61 parts by mass and an amount of phenoxyethyl methacrylate added of 7 parts by mass was used, the composition otherwise being the same as curable composition (d).

(Example 8)

A cylindrical printing plate precursor and a cylindrical printing plate were obtained in the same manner as in Example 2 except that instead of curable composition (d) curable composition (h) having an amount of the resin in curable composition (d) added of 67.9 parts by mass and an amount of phenoxyethyl methacrylate added of 0.1 parts by mass was used, the composition otherwise being the same as curable composition (d).

(Example 9)

A cylindrical printing plate precursor and a cylindrical printing plate were obtained in the same manner as in Example 2 except that instead of curable composition (d) curable composition (h) having an amount of the resin in curable composition (d) added of 68.8 parts by mass, an amount of phenoxyethyl methacrylate added of 0.1 parts by mass, and an amount of trimethylolpropane triacrylate of 0.1 parts by mass was used, the composition otherwise being the same as curable composition (d).

(Example 10)

65 parts by mass of an epoxy resin (EPICLON840, DIC), 20 parts by mass of the plasticizer ADK Cizer RS-540 (ADEKA), 8 parts by mass of diethylenetriamine, 6 parts by mass of porous fine powder silica ('Sylosphere (registered trademark) C-1504', Fuji Silysia Chemical Ltd.), and 1 part by mass of ethyl acetate as solvent were mixed at a temperature of 60°C, thus preparing curable composition (j). A cylindrical printing plate precursor and a cylindrical printing plate were obtained in the same manner as in Example 2 except that curable composition (j) was used instead of curable composition (d) and curing was carried out in an oven at 80°C for 1 hour instead of with a metal halide lamp.

(Example 11)

A cylindrical printing plate precursor and a cylindrical printing plate were obtained in the same manner as in Example 2 except that instead of curable composition (d) curable composition (k) containing the thermopolymerization initiator Perbutyl Z (NOF Corporation) in place of the benzophenone and 2,2-dimethoxy-2-phenylacetophenone as photopolymerization initiators of curable composition (d) was used, the composition otherwise being the same as curable composition (d), and curing was carried out in an oven at 100°C for 30 minutes instead of with a metal halide lamp.

(Example 12)

A laser-engraveable sheet-shaped printing plate precursor obtained in the same manner as in Example 1 was carefully affixed onto a cylindrical body obtained in the same manner as in Example 1 such that no bubbles entered, the end part section was filled with curable composition (c) using a dropper, the end parts were pressed using 100 μm thick PET (Pana-Peel, PANAC) whose surface had been subjected to a mold-release treatment, and curing was carried out with an exposure of 4000 $mJ/cm^2$ using a metal halide lamp. The PET was then peeled off, and laser engraving was carried out in the same manner as in Example 2, thus giving a cylindrical printing plate precursor and a cylindrical printing plate.

(Example 13)

A laser-engraveable cured resin sheet obtained in the same manner as in Example 10 was carefully affixed onto a cylindrical body obtained in the same manner as in Example 10 such that no bubbles entered, end parts were covered with 100 μm thick PET that had been subjected to a mold-release treatment, curable composition (k) was spooned into a gap between the PET and the end parts by means of a teaspoon, and curing was carried out in an oven at 100°C for 30 minutes. The PET was then peeled off, and laser engraving was carried out in the same manner as in Example 2, thus giving a cylindrical printing plate precursor and a cylindrical printing plate.

(Example 14)

A cylindrical printing plate precursor and a cylindrical printing plate were obtained in the same manner as in Example 2 except that instead of curable composition (d) curable composition (p) having an amount of the resin in curable composition (c) added of 68.9 parts by mass, an amount of phenoxyethyl methacrylate added of 0.1 parts by mass, and an amount of trimethylolpropane triacrylate of 0 parts by mass (none added) was used.

(Example 15)

The resin of curable composition (c) was changed to a polyester resin. A cylindrical printing plate precursor and a cylindrical printing plate were obtained in the same manner as in Example 2 except that instead of curable composition (d) curable composition (q) comprising as the polyester resin Vylon 103 (Toyobo Co., Ltd.) was used.

(Example 16)

The resin of curable composition (c) was changed to polybutadiene. A cylindrical printing plate precursor and a cylindrical printing plate were obtained in the same manner as in Example 2 except that instead of curable composition (d) curable composition (r) was used in which B-1000 (Nippon Soda Co., Ltd.) was used as the polybutadiene; B-1000 was 83 parts by mass, and plasticizer ADK Cizer RS-540 was 0 parts by mass (none added).

(Example 17)

(Production Example 2)

A separable flask equipped with a thermometer, a stirrer, and a reflux condenser was charged with 100 parts by mass of Gohsenal T-215 (watersoluble PVA, The Nippon Synthetic Chemical Industry Co., Ltd.) and 94.0 parts by mass of propylene glycol monomethyl ether acetate as solvent, and the polymer was dissolved by heating at 70°C for 120 minutes while stirring, thus giving a resin composition.

66 parts by mass of this resin composition, 19 parts by mass of phenoxyethyl methacrylate as an ethylenically unsaturated compound, 10 parts by mass of Sho Black N110 (DBP oil adsorption 115 mL/100 g, Cabot Corporation Japan) as carbon black, and 5 parts by mass of Perbutyl Z (*t*-butyl peroxybenzoate; NOF Corporation) as a polymerization initiator were mixed, thus giving resin composition (s). Resin composition (s) thus obtained was applied onto 100 μm thick polyethylene terephthalate (PET) as a sheet-shaped support using a doctor blade, thus forming a sheet-shaped photosensitive resin composition layer. Subsequently, the photosensitive resin composition layer thus obtained was cured in an oven at 100°C for 3 hours, thus producing cured resin sheet (t). This cured resin sheet was laser-engraveable, and the thickness was 1.7 mm.

(Preparation of curable composition)

Curable composition (u) was produced in the same manner as for curable composition (k) except that carbon black (Sho Black) was used instead of porous fine powder silica.

(Production of cylindrical printing plate precursor and cylindrical printing plate)

A cylindrical printing plate precursor was produced using cured resin sheet (t) and curable composition (u). This printing plate precursor was subjected to engraving using a fiber-coupled semiconductor laser engraving machine instead of a carbon dioxide laser. A cylindrical printing plate was obtained in the same manner as in Example 2 except that laser engraving was carried out using laser recording equipment provided with an SDL-6390 fiber-coupled semiconductor laser (FC-LD) (wavelength 915 nm, JDSU) having a maximum output of 8.0 W.

(Example 18)

The sheet-shaped printing plate precursor obtained in Example 1 was subjected to engraving using a carbon dioxide laser, thus producing a sheet-shaped printing plate.

A cylindrical printing plate was obtained in the same manner as in Example 2 except that the sheet-shaped printing plate was used instead of the sheet-shaped printing plate precursor, and only end parts were engraved again using a carbon dioxide laser.

(Comparative Example 1)

A cylindrical printing plate precursor and a cylindrical printing plate were obtained in the same manner as in Example 1 except that instead of curable composition (c) curable composition (m) having an amount of the resin in curable composition (c) added of 85 parts by mass and an amount of ethyl acetate added of 0 parts by mass (none added) was used.

(Comparative Example 2)

A cylindrical printing plate precursor and a cylindrical printing plate were obtained in the same manner as in Example 1 except that instead of curable composition (c) curable composition (n) having an amount of the resin in curable composition (c) added of 84.9 parts by mass and an amount of ethyl acetate added of 0.1 parts by mass was used.

(Comparative Example 3)

A cylindrical printing plate precursor and a cylindrical printing plate were obtained in the same manner as in Example 2 except that instead of curable composition (d) curable composition (p) having an amount of the resin in curable composition (c) added of 71 parts by mass, an amount of phenoxyethyl methacrylate added of 15 mass%, and an amount of trimethylolpropane triacrylate of 3 parts by mass was used, the composition otherwise being the same as curable composition (c).

(Comparative Example 4)

A cylindrical printing plate precursor and a cylindrical printing plate were obtained in the same manner as in Example 1 except that instead of curable composition (c) curable composition (q) having an amount of curable composition (c) added of 82 parts by mass and an amount of ethyl acetate added of 3 parts by mass was used.

(Measurement of percentage dimensional change)

Each curable composition was uniformly spread using a doctor blade on a stainless steel (SUS) plate (temporary support) having mold-release properties, thus producing a sample film. The size of the sample film was 100 mm x 100 mm and the thickness was 2 mm, and two samples of each were produced.

For each of the two samples, one thereof was photocured or thermally cured. In the case of photocuring, photocuring was carried out after 90 mass% or more of the solvent contained was volatilized by heating at 80°C for 5 minutes. In the case of thermal curing, curing was carried out by heating at 100°C for 30 minutes.

After said one of the sample films was cured, the uncured film and the cured film were peeled off from the SUS, and the dimensions thereof were measured.

Measurement of the dimensions was carried out using NTD25-20CX constant-pressure calipers (Mitutoyo Corporation). The average value of the length of two sides of the peeled cured sample film was divided by the average value of the length of two sides of the peeled uncured sample film, thus giving the percentage dimensional change (%) as an absolute value.

(Evaluation of printing properties)

Printing properties of the section where the end parts were joined was evaluated by printing. When printing could be carried out without printing defects such as bleeding or misses after printing 10 km or greater using a 5 pix line pattern, it was evaluated as excellent (E), when printing defects such as bleeding or misses occurred after printing at least 3 km but less than 10 km it was evaluated as good (G), when printing defects such as bleeding or misses occurred after printing at least 1 km but less than 3 km it was evaluated as poor (P), and when printing defects such as bleeding or misses occurred after printing less than 1 km it was evaluated as bad (B).

(Evaluation of adhesion)

After a section where end parts were joined was cured, an examination of whether or not the section could be peeled off by pushing with a finger was carried out; when it could not be peeled off and the interface could not be identified in end parts it was evaluated as good (G), when it could not be peeled off but the interface could be identified it was evaluated as poor (P), and when it could be peeled off it was evaluated as bad (B).

(Evaluation of adhesion under harsh environment)

Furthermore, after being stored at a high temperature of 50°C and a high humidity of 80% for 72 hours, an examination of whether or not the joined section could be peeled off by pushing ten times with a finger was carried out; when it could not be peeled off even by pushing ten times, it was evaluated as excellent (E), when the number of times of pushing before peeling off was 5 to 10, it was evaluated as good (G), when it was 1 to 4, it was evaluated as poor (P), and when it had already peeled off, it was evaluated as bad (B).

The evaluation results are summarized in Table 1.

Table 1

| | Solvent | Solvent concentration in curable composition (mass%) | Resin in curable composition | Percentage dimensional change (%) | Double bond content in curable composition (mmol/g) | End part flattening process | Printing properties | Adhesion evaluation | Adhesion evaluation under harsh environment |
|---|---|---|---|---|---|---|---|---|---|
| Example 1 | EA | 2.0 | Acrylic resin | 1.8 | 0.3 | Squeegee | G | G | P |
| Example 2 | EA | 1.0 | Acrylic resin | 1.5 | 0.3 | Squeegee | G | G | G |
| Example 3 | EA | 0.5 | Acrylic resin | 0.9 | 0.3 | Squeegee | E | G | G |
| Example 4 | EA | 0.2 | Acrylic resin | 0.5 | 0.3 | Squeegee | E | G | P |
| Example 5 | MEK | 1.0 | Acrylic resin | 1.2 | 0.3 | Squeegee | G | G | G |
| Example 6 | ACE | 1.0 | Acrylic resin | 1.2 | 0.3 | Squeegee | G | G | G |
| Example 7 | EA | 1.0 | Acrylic resin | 1.8 | 0.46 | Squeegee | G | G | P |
| Example 8 | EA | 1.0 | Acrylic resin | 1.1 | 0.094 | Squeegee | E | G | E |
| Example 9 | EA | 1.0 | Acrylic resin | 1.1 | 0.014 | Squeegee | E | G | G |
| Example 10 | EA | 1.0 | Epoxy resin | 0.3 | - | Squeegee | E | G | G |
| Example 11 | EA | 1.0 | Acrylic resin | 1.7 | 0.3 | Squeegee | G | G | G |
| Example 12 | EA | 1.0 | Acrylic resin | 1.2 | 0.3 | PET affix | G | G | G |
| Example 13 | EA | 1.0 | Acrylic resin | 1.2 | 0.3 | Fill | G | G | G |
| Example 14 | EA | 1.0 | Acrylic resin | 1.1 | 0.005 | Squeegee | G | P | P |
| Example 15 | EA | 1.0 | Polyester resin | 1.6 | 0.3 | Squeegee | G | G | G |
| Example 16 | EA | 1.0 | Polybutadiene | 1.7 | 0.3 | Squeegee | G | P | P |
| Example 17 | EA | 1.0 | Acrylic resin | 1.3 | 0.3 | Squeegee | G | G | G |
| Example 18 | EA | 1.0 | Acrylic resin | 1.5 | 0.3 | Squeegee | G | G | G |
| Comparative Example 1 | None | 0.0 | Acrylic resin | 0.5 | 0.3 | Squeegee | G | P | B |
| Comparative Example 2 | EA | 0.1 | Acrylic resin | 0.7 | 0.3 | Squeegee | G | P | B |
| Comparative Example 3 | EA | 1.0 | Acrylic resin | 2.5 | 1.1 | Squeegee | B | P | B |

(continued)

| | Solvent | Solvent concentration in curable composition (mass%) | Resin in curable composition | Percentage dimensional change (%) | Double bond content in curable composition (mmol/g) | End part flattening process | Printing properties | Adhesion evaluation | Adhesion evaluation under harsh environment |
|---|---|---|---|---|---|---|---|---|---|
| Comparative Example 4 | EA | 3.0 | Acrylic resin | 2.5 | 0.3 | Squeegee | B | G | P |

(Note) EA denotes ethyl acetate, MEK denotes methyl ethyl ketone, ACE denotes acetone.

## Claims

1. A process for producing a cylindrical printing plate precursor, comprising

   (1) a preparation step of preparing a cured resin sheet,
   (2) a wrapping step of wrapping the cured resin sheet around a cylindrical support,
   (3) a supply step of supplying a curable composition to a gap formed between end parts to be joined of the cured resin sheet, and
   (4) a curing step of curing the curable composition,

   the curable composition comprising a solvent that dissolves or swells the cured resin sheet,
   the solvent having a content of 0.2 to 2.0 mass% of the total amount of the curable composition, and
   the curable composition having a percentage dimensional change on curing of no greater than 2%.

2. The process for producing a cylindrical printing plate precursor according to Claim 1, wherein the curable composition comprises an ethylenically unsaturated compound, and the ethylenically unsaturated group content is 0.01 to 0.5 mmol per g of the curable composition.

3. The process for producing a cylindrical printing plate precursor according to Claim 1 or 2, wherein the curable composition comprises a polymerization initiator.

4. The process for producing a cylindrical printing plate precursor according to any one of Claims 1 to 3, wherein the curable composition comprises a cyclic ether compound.

5. The process for producing a cylindrical printing plate precursor according to any one of Claims 1 to 4, wherein it comprises between the wrapping step (2) and the curing step (4) a flattening step (a) of flattening the surface of a curable composition that is supplied or has been supplied.

6. The process for producing a cylindrical printing plate precursor according to any one of Claims 1 to 5, wherein it comprises between the wrapping step (2) and the supply step (3) a groove-forming step (b) of forming a groove between opposite end parts of the cured resin sheet.

7. The process for producing a cylindrical printing plate precursor according to any one of Claims 3 to 6, wherein the polymerization initiator is a photopolymerization initiator and the curing step (4) is a photocuring step (4a) or the polymerization initiator is a thermopolymerization initiator and the curing step (4) is a thermal curing step (4b).

8. The process for producing a cylindrical printing plate precursor according to any one of Claims 1 to 7, wherein the cylindrical printing plate precursor is a cylindrical printing plate precursor for laser engraving.

9. The process for producing a cylindrical printing plate precursor according to any one of Claims 1 to 8, wherein the cured resin sheet comprises a binder polymer selected from the group consisting of a conjugated diolefin resin, a polyurethane resin, and an acetal resin.

10. The process for producing a cylindrical printing plate precursor according to any one of Claims 1 to 9, wherein the curable composition comprises a resin selected from the group consisting of an acrylic resin, a polyester resin, a polyconjugated diene, and an epoxy resin.

11. The process for producing a cylindrical printing plate precursor according to any one of Claims 1 to 10, wherein the curable composition comprises as a solvent an aliphatic carboxylic acid ester having 4 to 6 carbons or an aliphatic ketone having 3 to 5 carbons.

12. The process for producing a cylindrical printing plate precursor according to any one of Claims 1 to 11, wherein the wrapping step (2) is a wrapping step of wrapping the cured resin sheet around a cylindrical support comprising a cushion layer.

13. A process for making a cylindrical printing plate, comprising
    a step of preparing a cylindrical printing plate precursor produced by the production process according to any one of Claims 1 to 12, and

an engraving step of laser-engraving the cylindrical printing plate precursor thus prepared.

**14.** A cylindrical printing plate made by the process according to Claim 13.

**15.** A process for making a cylindrical printing plate, comprising

(1) a preparation step of preparing a printing plate sheet,
(2) a wrapping step of wrapping the printing plate sheet around a cylindrical support,
(3) a supply step of supplying a curable composition to a gap between opposite ends of the printing plate sheet, and
(4) a curing step of curing the curable composition,

the curable composition comprising a solvent that dissolves or swells the printing plate sheet,
the solvent having a content of 0.2 to 2.0 mass% of the total amount of the curable composition, and
the curable composition having a percentage dimensional change on curing of no greater than 2%.

*FIG. 1*

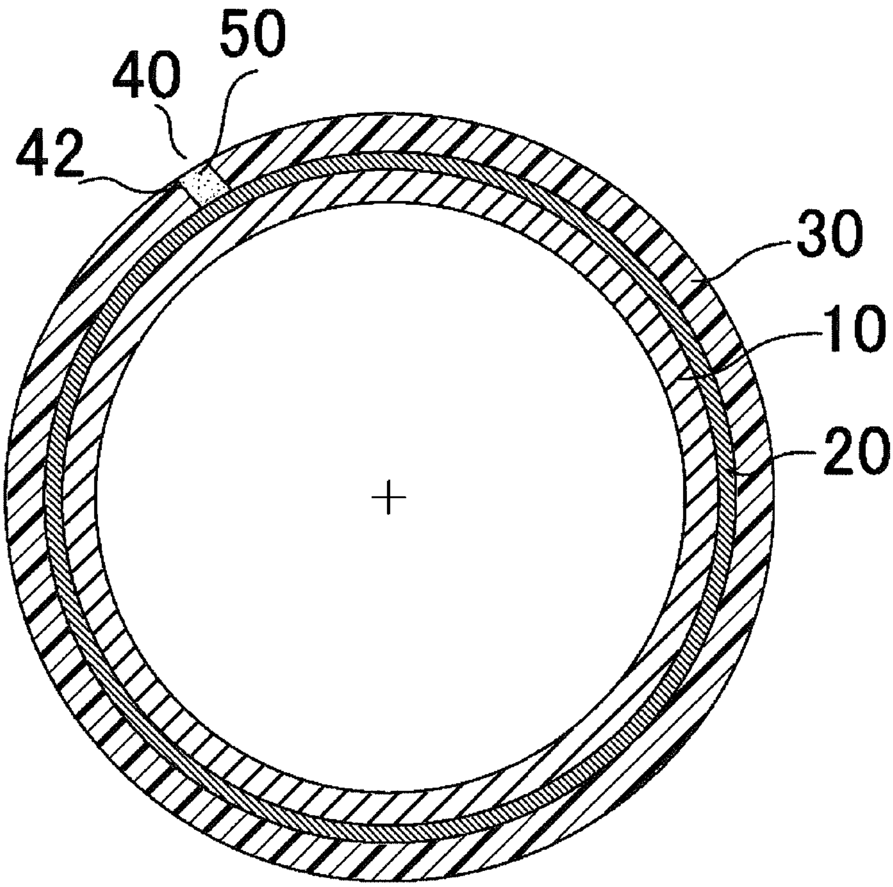

## INTERNATIONAL SEARCH REPORT

International application No.
PCT/JP2013/076209

A. CLASSIFICATION OF SUBJECT MATTER
*B41C1/05*(2006.01)i, *B41N1/12*(2006.01)i

According to International Patent Classification (IPC) or to both national classification and IPC

B. FIELDS SEARCHED

Minimum documentation searched (classification system followed by classification symbols)
B41C1/05, B41C1/18, B41N1/12, B41N1/16-1/22, G03F7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-238637 A (Asahi Kasei Chemicals Corp.), 08 September 2005 (08.09.2005), claim 1; paragraphs [0022], [0031] (Family: none) | 1-15 |
| A | JP 49-133105 A (Osamu TOKUNAGA, Hiroshi NISHIMURA), 20 December 1974 (20.12.1974), page 1, lower right column, line 20 to page 2, upper left column, line 12; fig. 1, 2 (Family: none) | 1-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 October, 2013 (29.10.13) | 12 November, 2013 (12.11.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2013/076209

C (Continuation). DOCUMENTS CONSIDERED TO BE RELEVANT

| Category* | Citation of document, with indication, where appropriate, of the relevant passages | Relevant to claim No. |
|---|---|---|
| A | JP 2-135347 A (Asahi Chemical Industry Co., Ltd.), 24 May 1990 (24.05.1990), claim 1; page 2, upper left column, lines 8 to 13 (Family: none) | 1-15 |
| A | JP 2001-146078 A (Sumitomo Rubber Industries, Ltd., Mitsubishi Heavy Industries, Ltd.), 29 May 2001 (29.05.2001), paragraphs [0036] to [0038]; fig. 1, 2 & US 2002/0134264 A1 & US 6782820 B1 | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005238637 A
- JP 2002187373 A
- JP 2011136430 A
- JP 5029648 B
- JP 2008063554 A
- JP 2009178869 A
- JP 2009172658 A
- JP 2009214334 A


### Non-patent literature cited in the description


- Senryo Binran. 1970
- Saishin Ganryo Binran. 1977
- Saishin Ganryo Ouyogijutsu. CMC Publishing, 1986
- Insatsu Inki Gijutsu. CMC Publishing, 1984
- **OKITSU.** *Journal of the Adhesion Society of Japan,* 1993, vol. 29 (5